# EUROPÄISCHE PATENTSCHRIFT

(11) **EP 3 386 307 B1**
(45) Veröffentlichungstag und Bekanntmachung des Hinweises auf die Patenterteilung: **08.09.2021**
(21) Anmeldenummer: 16829228.2
(22) Anmeldetag: 09.12.2016
(51) Int. Cl.: A01P 19/00, A01N 65/00, A01N 43/90, A01N 47/40, A01N 49/00, A01N 37/02, A01N 37/04, A01N 25/28, A01P 7/04

(54) **FLÜSSIGKERNKAPSELN ZUR BEKÄMPFUNG VON PFLANZENSCHÄDLINGEN**
LIQUID-CORE CAPSULES FOR CONTROLLING PLANT PESTS
CAPSULES À NOYAU LIQUIDE POUR LUTTER CONTRE DES PARASITES DES PLANTES

(30) Priorität: 11.12.2015 DE 102015016114
(43) Veröffentlichungstag der Anmeldung: 17.10.2018
(73) Patentinhaber: Katz Biotech AG, 15837 Baruth/Mark (DE)
(72) Erfinder: RADEMACHER, Jörg, 12277 Berlin (DE); KATZ, Peter, 12203 Berlin (DE); KÖHLER, Diana, 15806 Zossen (DE); HELLMUND, Markus, 12305 Berlin (DE)
(74) Vertreter: Sacht-Gorny, Gudrun
(86) Internationale Anmeldenummer: PCT/DE2016/000430
(87) Internationale Veröffentlichungsnummer: WO 2017/097282

(56) Entgegenhaltungen:
- EP-A1- 0 937 392
- EP-A1- 2 684 600
- WO-A1-90/00005
- WO-A1-96/03041
- DE-A1-102010 033 048

## Beschreibung

Die vorliegende Erfindung betrifft Flüssigkernkapseln zur Bekämpfung von Pflanzenschädlingen sowie ein Verfahren zur Herstellung derartiger Kapseln und eine Verwendung in der Schädlingsbekämpfung.

Die Schädlingsbekämpfung spielt in landwirtschaftlichen und gartenbaulichen Kulturen eine große Rolle. Vor allem verschiedene Insekten und Milben können in der Landwirtschaft und im Gartenbau große Schäden anrichten. Bei vielen Gemüsekulturen und Zierpflanzen (z. B. Tomate, Gurke, Paprika, Auberginen, Bohnen, Kopfsalat, Blatt- und Stengelgemüse sowie Schnittblumen wie Gerbera, Chrysanthemen und Rosen) können Wanzen (*z.B. Lygus ssp.*) große Schäden anrichten. Mit ihren Mundwerkzeugen stechen sowohl die Larven als auch die erwachsenen Tiere in die Pflanzen, um Pflanzengewebe oder -flüssigkeiten als Nahrung aufzusaugen. Um die Einstichstelle herum bilden sich die typischen Schadsymptome, insbesondere Nekrosen, Flecken und Wachstumsstörungen. Zumeist werden Blüten und Früchte angestochen, die dann absterben oder stark geschädigt werden. Nach einem Einstich sind die Früchte oder Zierpflanzen oft nicht mehr vermarktungsfähig. Weiterhin können die Wanzen pflanzenpathogene Viren und Bakterien übertragen, die Folgeschäden, wie z. B. Fäulnis, verursachen. Vor allem im Hinblick auf die Gemüseproduktion besteht daher ein erheblicher Handlungsbedarf bei der Wanzenbekämpfung.

Das besondere Problem bei der Bekämpfung von Wanzen besteht darin, dass die Tiere in der Regel sehr robust sind und daher bis zum Absterben relativ hohe Wirkstoffmengen aufnehmen müssen. Im Prinzip wäre dies durch eine orale Aufnahme von Fraßgiften (Wirkstoffen) möglich. Bei saugenden Schädlingen wie den Wanzen wäre es jedoch erforderlich, die Wirkstoffe in die Pflanze selbst einzubringen, damit die Gifte aufgesaugt werden können. Zudem saugen Wanzen an allen oberirdischen Pflanzenteilen, sodass ein Schutzmittel idealerweise im gesamten Pflanzengewebe gleichmäßig und hochdosiert verteilt sein müsste, um gut wirken zu können. Derartige Fraßgifte stehen jedoch nicht zur Verfügung, weil diese mit den bestehenden gesetzlichen Vorgaben (Zulassung, Rückstandsmengenverordnung) nicht vereinbar sind. Deshalb ist eine Wanzenbekämpfung derzeit nur mit relativ hochdosierten Kontaktinsektiziden möglich. Beispiele für derartige Kontaktinsektizide sind synthetische Pyrethroide und Neonicotinoide. Problematisch ist hierbei das ungünstige ökotoxikologische Profil der Kontaktinsektizide. Zudem ist aus Gründen des Verbraucherschutzes eine Anwendung dieser Insektizide in der Regel 14 bis 7 Tage vor der Ernte untersagt. Die Wirkstoffe sind auch bienengefährlich. Eine Anwendung derartiger Pflanzenschutzmittel ist daher stark reglementiert. Zudem ist eine derartige chemische Bekämpfung nicht nachhaltig, da sich Resistenzen ausbilden und auch Nützlinge abgetötet werden. Eine mit einer solchen Wanzenbekämpfung verbundene dauerhafte starke Beeinträchtigung von Nützlingspopulationen bedeutet zudem häufig das Ende eines vorteilhaften integrierten Pflanzenschutzes, bei dem vorrangig Nützlinge eingesetzt werden, deren Wirkung durch eine gezielte Ergänzung mit schonenden chemischen Pflanzenschutzmitteln unterstützt wird.

Die Verwendung von biologischen Pflanzenschutzmitteln bei der Wanzenbekämpfung war bisher nicht erfolgreich, da solche Substanzen oberflächlich ausgebracht werden und von den Wanzen nicht oder in nur ungenügender Menge aufgenommen werden, da Wanzen nur inneres Pflanzengewebe aufsaugen. In biologisch bewirtschafteten Kulturen stehen derzeit überhaupt keine geeigneten Bekämpfungsmittel zur Verfügung, da keine Nützlinge und keine nützlingsschonenden oder spezifischen Pflanzenschutzmittel zur Bekämpfung der Wanzen vorhanden sind. Aufgrund der unbefriedigenden Bekämpfungsmöglichkeiten, insbesondere im Bio-Anbau, geht derzeit ein Wanzenbefall mit erheblichen wirtschaftlichen Schäden einher.

Es ist bereits bekannt, Schädlingsbekämpfungsmittel mit Lockstoffen für die Schädlinge zu kombinieren. Beispielsweise beschreibt die deutsche Patentanmeldung DE 10 2005 056 795 A1 ein Pflanzenschutzmittel für die Abwehr der Kastanienminiermotte, wobei verhaltensmodifizierende Substanzen mit repellenter, deterrenter und/oder inhibitorischer Wirkung in Kombination beispielsweise mit Pheromonen angewendet werden. Die deutsche Patentanmeldung DE 195 28 529 A1 beschreibt ein Schädlingsbekämpfungsmittel mit mindestens einer Signalsubstanz und gegebenenfalls mit pestiziden Wirkstoffen, wobei zusätzlich ein UV-Absorber vorgesehen ist, um einen schnellen umweltbedingten Abbau des Mittels nach dem Ausbringen des Präparats zu vermeiden. Problematisch bei diesen Mitteln ist nach wie vor deren Wirksamkeit in Hinblick auf die Bekämpfung von Wanzen, da von diesen robusten Insekten immer eine verhältnismäßig große Menge des Insektizids oder allgemein des Bekämpfungsmittels aufgenommen werden muss, bevor die erwünschte Wirkung erzielt wird. Daher haben derartige Mittel, auch in Kombination mit einem Lockstoff für die Insekten, noch nicht die gewünschte Effektivität bei der Bekämpfung von Wanzen erzielt.

Aus der europäischen Patentschrift EP 2 415 356 B1 sind Mikrokapseln bekannt, die ein Nahrungssubstrat für Insekten, insbesondere für Florfliegen, oder für Raubmilben, imitieren. Es handelt sich hierbei um Matrixkapseln, die insgesamt von einer Matrixstruktur durchzogen sind, sodass die Insekten oder Milben die Kapseln insgesamt fressen oder mit einer sehr hohen Saugspannung aussaugen müssen, um an die Inhaltsstoffe zu gelangen.

Die internationale Patentanmeldung WO 90/00005 A1 hat ein mikroverkapseltes Pestizid zur Bekämpfung von Küchenschaben zum Gegenstand, wobei in der Außenhülle der Mikrokapseln ein Pheromon oder eine Futterquelle vorhanden ist.

Der vorliegenden Erfindung liegt die Aufgabe zugrunde, ein wirksames Präparat zur Schädlingsbekämpfung bereit zu stellen. Diese Aufgabe wird durch die im Anspruch 1 beschriebenen Flüssigkernkapseln gelöst. Bevorzugte Ausgestaltungen der Flüssigkernkapseln sowie ein Verfahren zur Herstellung der Flüssigkernkapseln und eine Verwendung in der Schädlingsbekämpfung sowie einen Träger für eine gesteuerte Wirkstofffreisetzung (Lockstofffreisetzung) sind Gegenstand der übrigen Ansprüche.

Die vorliegende Erfindung stellt ein neues Präparat zur Bekämpfung von Pflanzenschädlingen mit stechend-saugenden Mundwerkzeugen aus der Gruppe der Wanzen und/oder Zikaden bereit, das auf Flüssigkernkapseln mit getrennter Kern- und Hüllstruktur (*core* shell-Kapseln) basiert. Die erfindungsgemäßen Flüssigkernkapseln umfassen einen wässrigen Kern, der wenigstens ein Schädlingsbekämpfungsmittel sowie wenigstens ein Phagostimulans enthält. Mit dem Ausdruck "wässriger Kern" ist gemeint, dass der Kern eine flüssige Phase enthält, die sich im hohlen Inneren der Kapsel befindet. Weiterhin weisen die erfindungsgemäßen Flüssigkernkapseln eine diffusionshemmende Außenhülle auf, die wenigstens einen Lockstoff für die Pflanzenschädlinge enthält. Die diffusionshemmende Außenhülle zeichnet sich durch einen niedrigen Wassergehalt aus, sodass die Flüssigkernkapseln äußerlich im Prinzip trocken sind und insbesondere in Form eines rieselfähigen Granulats bereitgestellt werden können. Der Wassergehalt der Außenhülle ist dabei vorzugsweise < 1%, insbesondere < 0,5 %. In besonders bevorzugter Weise liegt der Wassergehalt der Außenhülle nahe Null. Dies kann insbesondere durch die Verwendung von Wachsen und/oder Fetten für die Außenhülle realisiert werden. Weiterhin wird durch die diffusionshemmende Außenhülle der Inhalt des wässrigen Kerns vor Verdunstung geschützt, sodass die Flüssigkernkapseln in einen Pflanzenbestand ausgebracht werden und über einen längeren Zeitraum nicht austrocknen und ihre Wirkung entfalten können.

Ein wichtiger Aspekt der erfindungsgemäßen Flüssigkernkapseln liegt in der Freisetzung der Lockstoffe aus der Außenhülle. Für die Herstellung der Außenhülle wird vorzugsweise eine Grundsubstanz verwendet, die auf Fetten und/oder Wachsen basiert, vorzugsweise Paraffin. In einer besonders bevorzugten Ausgestaltung umfasst die Außenhülle die Grundsubstanz auf der Basis von Fetten und/oder Wachsen sowie zusätzlich ein Öl, insbesondere ein Pflanzenöl. Geeignet ist beispielsweise Rapsöl oder Sonnenblumenöl. Prinzipiell können auch andere Öle, beispielsweise synthetische Öle, eingesetzt werden. Gegebenenfalls kann die Grundsubstanz auch nur teilweise von Fetten und/oder Wachsen gebildet sein. Insbesondere durch die Kombination der Grundsubstanz mit einem Öl kann eine dosierte und langfristige Freisetzung der Lockstoffe aus der Außenhülle erreicht werden, die für die schädlingsbekämpfende Wirkung der Flüssigkernkapseln besonders vorteilhaft ist.

Geeignet als Grundsubstanz sind allgemein Fettsäuren oder wachsartige Stoffe, die in der Lage sind, Filme mit den erforderlichen Funktionalitäten (Barriere, Festigkeit, Viskosität) auszubilden. In einer besonders bevorzugten Ausgestaltung basiert die Grundsubstanz der Außenhülle zumindest teilweise und vorzugsweise vollständig auf Paraffin und vorzugsweise auf Weichparaffin. Vor allem Weichparaffin hat sich als besonders geeignet herausgestellt, da es zum Einen einen sehr zuverlässigen Verdunstungsschutz gewährleistet und zum Anderen für die anzulockenden Insekten besonders leicht mit den Mundwerkzeugen zu durchstoßen ist.

Der Anteil des Öls in der Außenhülle liegt vorzugsweise in einem Bereich zwischen 1 und 25 % (w/w). Der prozentuale Anteil des Lockstoffs kann beispielsweise in einem Bereich zwischen 0,0001 bis 1 % liegen. Der besondere Effekt dieser Kombination aus Grundsubstanz, insbesondere Paraffin, Öl und dem Lockstoff in der Außenhülle ist nach Einschätzung der Erfinder darauf zurückzuführen, dass das in die Grundsubstanz eingemischte Öl sich sehr langsam entmischt und relativ kontinuierlich an der Oberfläche austritt (Ausschwitzen). Ursächlich für diesen Effekt ist vermutlich die unterschiedliche Dichte, die bei den unpolaren Substanzen zu der Entmischung führt. Die Dichte von Paraffin beträgt bei Raumtemperatur etwa 0,81- 0,89 g/cm³, die Dichte von beispielsweise Rapsöl ist etwas höher und beträgt 0,9 bis 0,92 g/cm³. Die Geschwindigkeit der Trennung nimmt mit der Höhe der Dichtedifferenz zu und lässt sich somit durch die Auswahl entsprechender Kombinationen regulieren. Ein weiterer Steuermechanismus ergibt sich durch die eingesetzte Ölmenge. Mit der Menge des in die Grundsubstanz eingemischten Öls sinkt die absolute Freisetzungsmenge des Lockstoffs pro Zeiteinheit, wie sich in Versuchen gezeigt hat. Das Öl wirkt dabei in Bezug auf die Lockstofffreisetzung als Inhibitor.

Die Verwendung von Pflanzenöl in der Außenhülle hat den weiteren Effekt, dass das Pflanzenöl als Einstichstimulans bei den zu bekämpfenden Pflanzenschädlingen wirken kann. Ein Einstichstimulans ist ein Signalstoff, der dem Tier (Pflanzenschädling) eine mögliche Nahrungsquelle anzeigt oder diese zumindest vermuten lässt. Das Einstichstimulans führt dazu, dass vor allem das Einstichverhalten der Schädlinge ausgelöst oder verstärkt wird. Beispielsweise wirken Öle von Kreuzblütlern, z.B. Rapsöl, oder davon abgeleitete Substanzen als Einstichstimulans für bestimmte Schädlingen, sodass Rapsöl besonders bevorzugt ist. Außer einem Pflanzenöl können auch andere Einstichstimulanzien oder gegebenenfalls mehrere Einstichstimulanzien für die Flüssigkernkapseln verwendet werden.

Das aus der Außenhülle austretende Öl verstärkt insbesondere bei Wanzen das Auslösen des Einstichverhaltens und der Nahrungsaufnahme (Phagostimulanz) und hat den weiteren Effekt, dass es gleichzeitig den Transport der Lockstoffe an die Kapseloberfläche verlangsamt, wo diese in die Luft abgegeben werden (verdampfen). Von der Kapsel abgeriebenes oder abgewaschenes Öl (z.B. bei mechanischer Behandlung oder Regen) wird relativ kontinuierlich aus der Schicht der Außenhülle ersetzt.

Die einzelnen Komponenten der Außenhülle haben damit die folgenden Funktionen:
- Grundsubstanz, z. B. Paraffin: Diffusions-, Oxidations- und UV-Schutz für die Kernlösung, Depot für Lockstoff und Öl
- Öl, z. B. Pflanzenöl: Einstichstimulans und Phagostimulans, Regulator für die Lockstofffreisetzung
- Lockstoffe, insbesondere flüchtige Lockstoffe: Anlockung der Pflanzenschädlinge Die Außenhülle erlaubt damit als besondere Funktionen eine kontinuierliche und langfristige Freisetzung von flüchtigen Lockstoffen zur Anlockung von Pflanzenschädlingen sowie eine kontinuierliche und langfristigen Freisetzung des Öls, das als attraktiver Nahrungsbestandteil bzw. als Stimulans für das Einstechen und für die Nahrungsaufnahme bei den Pflanzenschädlingen wirkt.

Allgemein gelten im Bereich von Pflanzenschutzmaßnahmen bei der Schädlingsbekämpfung Wirkzeiträume von etwa 1 Woche als akzeptabel. Ein solcher Zeitraum für die Lockstofffreisetzung kann ohne weiteres mit den erfindungsgemäßen Flüssigkernkapseln erreicht werden. Durch verschiedene Anpassungsmöglichkeiten sind jedoch auch durchaus längere Zeiträume für die Lockstofffreisetzung und natürlich für die Stabilität der Flüssigkernkapseln möglich. Beispielsweise kann durch eine Erhöhung der Schichtdicke bei der Außenhülle die Lockstofffreisetzung verlängert werden. Im Allgemeinen kann die Außenhülle beispielsweise von etwa 15 bis 30 % Material, also insbesondere Grundsubstanz plus Öl, bezogen auf das Gewicht der Kapseln gebildet werden. Durch einen relativ hohen Anteil, z. B. 30 %, kann die Freisetzung des Lockstoffs über einen langen Zeitraum retardiert werden.

In besonders bevorzugter Weise weist die Außenhülle einen äußeren Bereich auf, der lockstofffrei ist. Dieser Außenbereich kann beispielsweise im Wesentlichen von der Grundsubstanz oder von der Grundsubstanz plus Öl gebildet werden. Durch diese Maßnahme wird eine weitere Einstellmöglichkeit für die Geschwindigkeit bzw. die Dauer der Lockstofffreisetzung realisiert, wobei durch diesen zusätzlichen äußeren Bereich eine weitere Verlangsamung der Wirkstofffreisetzung erzielt wird. Zudem kann bei dieser Ausgestaltung die erforderliche Menge des im Allgemeinen kostenintensiven Lockstoffs durch diese Optimierung der Freisetzungsrate bei gleichbleibender Wirksamkeit der Kapseln reduziert werden. Da das Öl in der Außenhülle neben seiner inhibitorischen Funktion für die Lockstofffreisetzung auch als Einstichstimulans wirkt, kann es vorteilhaft sein, auf das Öl in dem äußeren zusätzlichen Bereich der Außenhülle zu verzichten, um auch für das Öl eine redardierte Freisetzung zu erreichen, die an die Freisetzung des Lockstoffs angepasst ist. So werden Öl und Lockstoff parallel freigesetzt, was besonders vorteilhaft sein kann, wenn beide Substanzen bei der Wirkung auf die Pflanzenschädlingen miteinander wechselwirken. Die Außenhülle kann beispielsweise auch so aufgebaut sein, dass verschiedenen Bereiche mit unterschiedlicher Lockstoffkonzentration fließend ineinander übergehen. Hierbei kann insbesondere die Lockstoffkonzentration in der Außenhülle von innen nach außen abnehmen.

Der Kerninhalt umfasst weiterhin wenigstens ein Phagostimulans, durch das die Pflanzenschädlinge verstärkt dazu angeregt und stimuliert werden, den Kerninhalt aufzunehmen. Allgemein handelt es sich bei Phagostimulanzien um Substanzen, die die Tiere zum Fressen animieren. Insbesondere können als Phagostimulanzien Kohlenhydrate und/oder Aminosäuren und/oder Fette eingesetzt werden. Besonders geeignet ist ein Nährmittel für die Pflanzenschädlinge, das derartige Substanzen enthält, wobei zu diesem Zweck beispielsweise eine Standardnährlösung für Wanzen oder andere Insekten verwendet werden kann. Als Phagostimulanzien eignen sich beispielsweise auch Süßstoffe, z. B. Stevia und/oder Erythrit.

Vorzugsweise ist der wässrige Kern der Flüssigkernkapseln von einer Hydrogel-Hülle umgeben. Dies hat insbesondere im Hinblick auf die Herstellung der Flüssigkernkapseln besondere Vorteile. Die Hydrogel-Hülle dient in erster Linie einer Stabilisierung des wässrigen Kerns der Kapseln während eines bevorzugten Herstellungsprozesses für die Flüssigkernkapseln. Bei diesem Herstellungsprozess werden zunächst Primärkapseln hergestellt, die aus dem von der Hydrogel-Hülle ummantelten flüssigen Kern bestehen. Anschließend werden diese Primärkapseln mit dem Material für die Außenhülle beschichtet. Es sind jedoch auch andere Herstellungsprozesse möglich, bei denen die Hydrogel-Hülle nicht zwingend erforderlich ist. Der erwähnte Herstellungsprozess mit den Primärkapseln hat sich jedoch als besonders vorteilhaft und geeignet erwiesen, wie weiter unten noch näher erläutert werden wird.

Die Flüssigkernkapseln erlauben in besonders vorteilhafter Weise eine Bekämpfung von Pflanzenschädlingen aus der Gruppe der Wanzen und/oder Zikaden und insbesondere auch eine Bekämpfung von sehr robusten Pflanzenschädlingen, wie beispielsweise pflanzenschädigenden Wanzen, die mit herkömmlichen Schädlingsbekämpfungsmitteln nur sehr schwer oder mit unbefriedigendem Erfolg bekämpft werden können. Dabei ist die funktionelle Außenhülle der erfindungsgemäßen Flüssigkernkapseln für beißend-saugende und/oder stechend-saugende Mundwerkzeuge der zu bekämpfenden Pflanzenschädlinge durchstoßbar. Die erfindungsgemäßen Flüssigkernkapseln sind daher für die Bekämpfung von pflanzenschädigenden Schädlingen geeignet, die stechend-saugende Mundwerkzeuge aufweisen.

Der Kern der erfindungsgemäßen Flüssigkernkapseln weist eine wässrige Lösung oder eine Emulsion auf wässriger Basis auf. Die Konsistenz des Inhalts der Flüssigkernkapseln ist damit an die natürliche Nahrung der Pflanzenschädlinge angepasst, sodass die Pflanzenschädlinge den Inhalt der Flüssigkernkapseln mit ihren Mundwerkzeugen aufnehmen können. Die erfindungsgemäßen Flüssigkernkapseln imitieren in gewisser Weise das Nahrungssubstrat für die Pflanzenschädlinge, also beispielsweise eine Frucht oder ein anderes Pflanzenteil. Durch den oder die Lockstoff(e), der oder die in oder an der Außenhülle der Flüssigkernkapseln enthalten ist/sind, werden die Pflanzenschädlinge angelockt und dazu angeregt, die Flüssigkernkapseln für eine Nahrungsquelle zu halten und in die Flüssigkernkapseln zu stechen und den Inhalt der Flüssigkernkapseln mit dem darin enthaltenen Bekämpfungsmittel zumindest teilweise aufzunehmen. Ob der Inhalt des Kerns von einer wässrigen Lösung oder einer Emulsion auf wässriger Basis gebildet wird, ist vor allem davon abhängig, welches konkrete Schädlingsbekämpfungsmittel eingesetzt wird und ob dieses konkrete Schädlingsbekämpfungsmittel sich in Wasser oder einem wässrigen Puffer lösen lässt oder einfacher als Emulsion bereitgestellt werden kann. Wichtig ist, dass die wässrige Phase, die Inhalt des Kerns ist, mit den Mundwerkzeugen der Pflanzenschädlinge aufgesaugt werden kann.

Die erfindungsgemäßen Flüssigkernkapseln basieren auf dem sogenannten Attract-and-Kill-Prinzip und wirken auf die Pflanzenschädlinge anlockend. Durch das Aufsaugen des Kerninhalts der Flüssigkernkapseln werden die Pflanzenschädlinge durch das im Kern enthaltene Schädlingsbekämpfungsmittel effektiv bekämpft, wobei die Wirkung des Schädlingsbekämpfungsmittels von dem jeweils verwendeten Schädlingsbekämpfungsmittel abhängt. Die Pflanzenschädlinge können beispielsweise immobilisiert, verletzt oder abgetötet werden, sodass eine Schadwirkung der Pflanzenschädlinge auf den Pflanzenbestand oder eine anderweitige Schadwirkung verhindert oder zumindest erheblich reduziert wird.

Die erfindungsgemäßen Flüssigkernkapseln eignen sich zur Bekämpfung von Wanzen und Zikaden. Vor allem eignen sich die erfindungsgemäßen Flüssigkernkapseln zur Bekämpfung von landwirtschaftsrelevanten und/oder gartenbaurelevanten Pflanzenschädlingen.

Die erfindungsgemäßen Flüssigkernkapseln eignen sich für den Einsatz mit verschiedenen Schädlingsbekämpfungsmitteln. Beispielsweise eignen sich die Flüssigkernkapseln für den Einsatz von herkömmlichen chemischen Schädlingsbekämpfungsmitteln (chemische Wirkstoffe), die in Kombination mit den Flüssigkernkapseln als Fraßgifte eingesetzt werden können. Beispiele für chemische Fraßgifte, die erfindungsgemäß eingesetzt werden können, sind lambda-Cyhalothrin (Wirkstoff z.B. in KARATE® ZEON), Spinosad (Wirkstoff z.B. in CONSERVE™) oder Thiacloprid (Wirkstoff z.B. in CALYPSO®).

Mit besonderem Vorteil können als Wirkstoffe biologische und natürliche Bekämpfungsmittel gegen pflanzenschädigende Schädlinge eingesetzt werden. Durch den erfindungsgemäßen Aufbau der Flüssigkernkapseln können mit Hilfe dieser Kapseln auch bisher nicht verwendete oder nur mit unzureichendem Erfolg eingesetzte Schädlingsbekämpfungsmittel in dieser Form erfolgreich zum Einsatz kommen. In einer besonders bevorzugten Ausgestaltung der erfindungsgemäßen Flüssigkernkapseln ist das Schädlingsbekämpfungsmittel wenigstens ein biologischer Wirkstoff. Mit besonderem Vorteil können dabei bereits zugelassene und erprobte biologische Wirkstoffe verwendet werden. Besonders geeignet sind beispielsweise biologische Wirkstoffe von entomopathogenen Bakterien und/oder entomopathogenen Viren und/oder Neembaum-Wirkstoffe und/oder wenigstens ein Derivat dieser Substanzen. Bei den Wirkstoffen von entomopathogenen Bakterien handelt es sich vorzugsweise um sogenannte Bt-Isolate (Bt - *Bacillus thuringiensis*), die bereits zur Bekämpfung von Fraßschädlingen bekannt sind. Die Bt-Toxine führen dabei zur Auflösung der Darmwand. Hierbei tritt der Tod des Pflanzenschädlings zwar nicht sofort ein, aber die Nahrungsaufnahme wird sehr schnell eingestellt, sodass die pflanzenschädigende Wirkung beendet wird. Bei viralen entomopathogenen Wirkstoffen handelt es sich insbesondere um Granuloseviren, die den Verdauungstrakt schädigen und beispielsweise bei Schadschmetterlingsraupen innerhalb von ein bis zwei Tagen zum Tod führen. Spezifische Bt- und Granulosevirus-Päparate zur Wanzenbekämpfung sind derzeit nicht erhältlich, weil diese bei der herkömmlichen Spritzbehandlung nicht von Wanzen aufgenommen werden können. In Verbindung mit den erfindungsgemäßen Flüssigkernkapseln können diese Wirkstoffe jedoch effektiv zum Einsatz kommen. Weiterhin sind Neembaum-Präparate besonders bevorzugt. Sie sind bereits für die Schädlingsbekämpfung bekannt und können mit besonderem Vorteil für die erfindungsgemäßen Flüssigkernkapseln eingesetzt werden. Neembaum-Präparate haben sich in Kombination mit den erfindungsgemäßen Flüssigkernkapseln als besonders wirkungsvoll erwiesen. Vorzugsweise werden Neembaumöl-Präparate eingesetzt, die das insektizid wirkende Azadirachtin enthalten, welches sich in besonders vorteilhafter Weise für eine biologische Schädlingsbekämpfung eignet. In Labor und Feldstudien konnte bereits eine Wirkung auf Wanzen nach einer Sprühbehandlung mit Azadirachtin nachgewiesen werden (z. B. DARA, S. (2013): Biological and Microbial Control Options for Managing Lygus Bug in Strawberries. Lygus Bug IPM Seminar, UCCE, Watsonville, 18 April, 2013*. http:*//*cesantabarbara.ucanr.edu*/*files*/*165601.pdf*)*.* Der Wirkstoff Azadirachtin wirkt sehr vielfältig auf den Organismus der Wanzen, z.B. werden die Nahrungsaufnahme, die Entwicklung, die Bewegung und die Fortpflanzung gehemmt. Durch die Kombination des Wirkstoffs Azadirachtin mit den erfindungsgemäßen Flüssigkernkapseln kann die Schadwirkung von Wanzen erheblich reduziert werden.

Die Hydrogel-Hülle, die bei den erfindungsgemäßen Flüssigkernkapseln vorgesehen sein kann, wird vorzugsweise von einer Biopolymerzusammensetzung gebildet. Hierbei werden insbesondere die Biopolymere Alginat und/oder Pektin eingesetzt. Mit besonderem Vorteil können weitere Additive zugesetzt werden, beispielsweise Schellack und/oder Wachse. Diese Zusätze haben den Vorteil, dass die Hydrogel-Hülle wesentlich dünner und stabiler ausgebildet werden kann, insbesondere im Vergleich mit einer Hülle, die beispielsweise nur aus Alginat und/oder Pektin aufgebaut ist. Gleichzeitig werden die Stabilität und die Eigenschaften der Hydrogel-Hülle im Hinblick auf eine Wasserdiffusion verbessert. Insbesondere wird hierbei die Wasserdiffusion soweit eingeschränkt, dass der Flüssigkern beim Beschichtungsvorgang für die Herstellung der funktionellen Außenhülle kein oder erheblich weniger Wasser durch Verdunstung verliert. In einer besonders bevorzugten Ausgestaltung der Flüssigkernkapseln wird als Additiv für die Hydrogel-Hülle mikrokristalline Cellulose (MCC) eingesetzt. Eine Zugabe von MCC, beispielsweise in einem Konzentrationsbereich zwischen circa 0,1 bis 0,5 %, insbesondere 0,3 % in der Biopolymerzusammensetzung, resultiert in einer Hydrogel-Hülle, die dünner und gleichzeitig stabiler als andere Hydrogel-Hüllen ist.

Der Kern mit der darin enthaltenen wässrigen Phase und die diesen Kern umgebende Hydrogel-Hülle bildet verfahrenstechnisch gesehen die sogenannte Primärkapsel, die mit der funktionellen Außenhülle beschichtet wird. Diese Außenhülle hat zum einen die Funktion, für die Mundwerkzeuge der zu bekämpfenden Pflanzenschädlinge durchstoßbar zu sein. Zum anderen hat die Außenhülle die Funktion, anlockend auf die Pflanzenschädlinge zu wirken, indem wenigstens ein Lockstoff in die Außenhülle integriert wird (funktionelle Außenhülle). Weiterhin ist es wesentlich, dass die Außenhülle diffusionshemmend ist, damit die Außenhülle die erforderliche Stabilität der Flüssigkernkapseln und einen Schutz vor schädlichen Umwelteinflüssen, wie insbesondere einen Schutz vor Trockenheit und UV-Strahlung, gewährleisten kann.

Die Außenhülle wird vorzugsweise so hergestellt, dass ein entsprechendes Gemisch für die funktionelle Außenhülle auf die Primärkapseln aufgesprüht wird, wobei vorzugsweise eine Sprühbeschichtung der Primärkapseln in einer Wirbelschicht durchgeführt wird. Weiterhin ist es möglich, dass die Grundsubstanz und ein separates Gemisch, welches den oder die Lockstoff(e) enthält, in Form einer Doppelschicht auf die Primärkapsel aufgebracht werden. Im Sinne der obigen Beschreibung ist diese Doppelschicht als Außenhülle mit mehreren bzw. zwei Bereichen zu verstehen. Diese Doppelschicht, wobei die äußere Schicht (der äußere Bereich) hierbei vorzugsweise von der Grundsubstanz allein oder in Kombination mit dem Öl gebildet wird, hat den bereits erwähnten Vorteil einer weiter verzögerten Lockstofffreisetzung. Auch diese zweifache Sprühbeschichtung der Primärkapseln kann in einem Prozess ohne Unterbrechung der Wirbelschicht hergestellt werden. Dazu ist es lediglich erforderlich, die Ansaugung der Sprühlösung von einem Behälter, in dem sich die Substanzen der inneren Schicht befinden, auf einem anderen Behälter umzustellen, in dem sich die Substanzen für den äußeren Bereich befinden. Alternativ kann die funktionelle Außenhülle auch ohne den Zwischenschritt der Herstellung einer Primärkapsel in der unten näher beschriebenen Weise hergestellt werden.

Die Verwendung von Beschichtungssubstanzen auf der Basis von Fetten und/oder Wachsen hat weiterhin den Vorteil, dass hierdurch der Wasserverlust in der Kernlösung aufgrund der Verdunstung stark begrenzt werden kann. Weiterhin haben diese Substanzen den Vorteil, dass sie weitestgehend für schädliche UV-Strahlung undurchdringlich sind und daher einen Schutz vor einem umweltbedingten Abbau der Kerninhaltsstoffe gewährleisten.

Vorteilhafterweise handelt es sich bei dem Lockstoff um einen flüchtigen Lockstoff, der von der Außenhülle in die nähere Umgebung abgegeben wird. Dieser Lockstoff entwickelt damit eine gewisse Fernwirkung, sodass hierdurch Pflanzenschädlinge, die sich in der Umgebung der Flüssigkernkapseln aufhalten, angelockt werden. Vorzugsweise handelt es sich bei dem Lockstoff um eine von Pflanzen natürlicherweise abgesonderte Substanz oder eine davon abgeleitete Substanz, insbesondere eine Substanz mit einem Kohlenwasserstoffgerüst, beispielsweise flüchtige Aldehyde, Alkohole, Ester oder Terpene. Es handelt sich dabei insbesondere um flüchtige organische Verbindungen (volatile organic compounds - VOC), die von Pflanzen natürlicherweise abgesondert werden und die in der Natur vielfältige Funktionen erfüllen. Derartige Substanzen finden sich beispielsweise auf der Oberfläche von Pflanzenteilen (kutikuläre Substanzen) oder werden von den Pflanzen über deren Spaltöffnungen oder Drüsen nach außen abgegeben. Weiterhin können flüchtige chemische Verbindungen als Lockstoffe eingesetzt werden. Besonders bevorzugt sind Substanzen, die natürlicherweise Bestandteile der sogenannten "Gründüfte" (green leaf volatiles - GLV) sind, die von Pflanzen bei mechanischer Verletzung abgegeben werden. Diese Substanzen wirken unter anderem anlockend auf die jeweiligen Pflanzenschädlinge. Erfindungsgemäß werden derartige Lockstoffe oder eine davon abgeleitete Substanz, die die gleiche Wirkung auf die Pflanzenschädlinge ausübt, für die erfindungsgemäßen Flüssigkernkapseln verwendet. Als Lockstoffe können z. B. synthetische Substanzen (Derivate) eingesetzt werden, die den natürlichen Lockstoffen nachempfunden sind und/oder die die gleiche Wirkung auf die Pflanzenschädlinge wie die natürlichen Lockstoffe entfalten. Eine besonders bevorzugte Basiszusammensetzung für den Lockstoff beinhaltet Hexenol (z. B. 46,7 %), (Z)-3-Hexenylacetat (z. B. 32,5 %), (Z)-3-Hexenal (z. B. 5,7 %), (E,E)-α-Farnesen (z. B. 4 %), β-Bourbonen Isomer (+) (z. B. 3,9 %), (Z)-3- (Z)-3-Hexenylbutanoat (z. B. 3,6 %), β-Caryophyllen Isomer (-) (z. B. 0,8 %) und (E)-4,8-Dimethyl-1,3,7-nonatrien (z. B. 0,1 %). Es ist bereits bekannt, das derartige Verbindungen verstärkt aus verwundeten Blattmaterial austreten und auf Insekten anlockend wirken (PARE, P. W .& TUMLINSON J. H. (1999): Plant Volatiles as a Defense against Insect herbivores. Plant Physiology, October 1999, Vol. 121, pp. 325-331*;* FRATI F. et al (2008): Role of the plant - conspecific complex in host location and intra-specific communication of Lygus rugulipennis. Physiol. Entomol. (2008) 33, 129-137*).* Die Basissubstanzen des Lockstoffs können in vielfältiger Weise ergänzt und in ihrem Verhältnis zueinander verändert werden, um die Wirkung zu modifizieren und an die jeweils zu bekämpfenden Pflanzenschädlinge anzupassen. Es können auch typische Blütenduftstoffe wie etwa Phenylacetaldehyd oder (E)-Cinnamaldehyd zur erfolgreichen Anlockung der Pflanzenschädlinge verwendet werden.

Die Verwendung von flüchtigen Lockstoffen ist besonders vorteilhaft, da in der Regel die zu bekämpfenden Pflanzenschädlinge mit Hilfe von spezifischen Chemorezeptoren an deren Antennen entsprechende Lockstoffe registrieren und dann eine gerichtete Bewegung (Chemotaxis) ausführen. Dieses natürliche Verhalten der Tiere wird benutzt, indem geeignete Lockstoffe insbesondere in konzentrierter Form in die Außenhülle der Flüssigkernkapseln eingebracht werden. In diesem Zusammenhang sind vor allem die in allgemeinen Pflanzendüften (Gründüfte) enthaltenen Substanzen als Lockstoff für Pflanzenschädlinge, insbesondere für die Wiesenwanze, geeignet. Vorzugsweise wird dabei der oder die Lockstoff(e) so gewählt und in einer solchen Konzentration eingesetzt, dass der Lockstoff und damit die erfindungsgemäßen Flüssigkernkapsel für den Pflanzenschädling eine höhere Attraktivität als die Pflanze besitzt.

Die erfindungsgemäßen Flüssigkernkapseln zeichnen sich durch eine trockene, diffusionshemmende Außenhülle aus. Sie können daher als trockenes und rieselfähiges Granulat bereitgestellt werden, das eine einfache Handhabung bei dem Ausbringen der Flüssigkernkapseln beispielsweise in einen Pflanzenbestand ermöglicht.

In besonders vorteilhafter Weise werden für die funktionelle Außenhülle und gegebenenfalls für die Hydrogel-Hülle Substanzen verwendet, die bedenkenlos in die Umwelt eingebracht werden können. Besonders geeignet sind Substanzen, die im Lebensmittelbereich bereits Verwendung finden. Auch aus diesem Grund sind beispielsweise Fette, Wachse oder Schellack als Substanzen für die Flüssigkernkapseln besonders geeignet.

Die Außenhülle der erfindungsmäßen Flüssigkernkapseln hat vorzugsweise eine durchschnittliche Dicke in einem Bereich zwischen 50 und 500 µm, insbesondere zwischen 100 und 300 µm. Die Schichtdicke der Hydrogel-Hülle beträgt im Mittel vorzugsweise zwischen 50 bis 350 µm, insbesondere zwischen 80 und 150 µm. Versuche haben gezeigt, dass bei einem solchen Aufbau der Flüssigkernkapseln die Pflanzenschädlinge die Hülle der Kapseln ohne weiteres durchstoßen können, um so an den Inhalt der Flüssigkernkapseln gelangen zu können.

Der durchschnittliche Durchmesser der Flüssigkernkapseln liegt in einem Bereich zwischen 1 und 10 mm, insbesondere zwischen 2 und 6 mm. Diese Größe der Mikrokapseln hat sich als besonders vorteilhaft erwiesen, da diese Größe von den Wanzen oder auch von anderen Pflanzenschädlingen gut gehandhabt werden kann, sodass die einzelnen Kapseln von den Pflanzenschädlingen fixiert und angestochen werden können. Weiterhin ist eine Größe der Flüssigkernkapseln in diesem Bereich auch deshalb sehr günstig, weil die Flüssigkernkapseln mit dieser Größe mit üblichen Verfahren, z. B. mithilfe eines Saatgutstreuers, in einen Pflanzenbestand ausgebracht werden können.

Die kugelartige Form der erfindungsgemäßen Flüssigkernkapseln bietet eine große Oberfläche, an der der Lockstoff oder die Lockstoffe austreten kann/können. Die Wirksubstanzen, also das oder die Schädlingsbekämpfungsmittel, werden durch die funktionelle Außenhülle vor schädlichen Umwelteinflüssen, insbesondere vor Austrocknung, vor UV-Schädigung und gegebenenfalls vor Oxidation, geschützt. Weiterhin können die erfindungsgemäßen Flüssigkernkapseln mit bestehenden Verfahren und Geräten, beispielsweise einem Saatgutausbringer oder einem Düngermischer, großflächig und engmaschig ausgebracht werden. Sie eignen sich dabei auch zum Einsatz außerhalb des Erdbodens und können im Prinzip für eine Vielzahl von Pflanzenschädlingsarten eingesetzt werden, wobei in Abhängigkeit von dem jeweiligen Organismus eine entsprechende Anpassung der Substanzen vorgenommen werden sollte.

Die erfindungsgemäßen Flüssigkernkapseln haben den besonderen Vorteil, dass die Wirkstoffe nicht direkt mit dem Erntegut in Kontakt kommen, da sie abgekapselt sind. Die Gefahr, dass Rückstände in die Nahrungskette gelangen, ist daher weitgehend reduziert. Weiterhin ist eine Einhaltung von Wartezeiten zwischen dem Zeitpunkt der Behandlung und der Ernte im Allgemeinen nicht erforderlich, sodass Pflanzenkulturen lückenlos geschützt werden können. Im Vergleich mit herkömmlichen Bekämpfungsmitteln können die erfindungsgemäßen Flüssigkernkapseln und die darin enthaltenen Wirkstoffe wesentlich sparsamer eingesetzt werden, da die Pflanzenschädlinge durch die erfindungsgemäßen Flüssigkernkapseln angeregt werden, sich zu den Flüssigkernkapseln und damit zu dem Bekämpfungsmittel hin zu bewegen. Die Kulturen brauchen daher nicht flächendeckend behandelt zu werden. Weiterhin ist die Wirkung der erfindungsgemäßen Flüssigkernkapseln durch die spezifischen Lockstoffe auf bestimmte Zielorganismen, also auf die konkret zu bekämpfenden Pflanzenschädlinge, eingegrenzt. Durch dieses hochspezifische Bekämpfungsverfahren sind die erfindungsgemäß formulierten Bekämpfungsmittel nicht bienengefährlich und wirken nachhaltig, da vorhandene Nützlingspopulationen geschützt werden. Weiterhin können die erfindungsgemäßen Flüssigkernkapseln auch in Kombination mit Bekämpfungsmitteln verwendet werden, die in bisherigen Applikationen keine Wirkung zeigen. Dies liegt insbesondere daran, dass Fraßgifte appliziert werden können, die bei herkömmlicher Ausbringung sich nur auf der Pflanzenoberfläche anlagern und daher nicht von saugenden Pflanzenschädlingen aufgenommen werden. Auch können Bekämpfungsmittel mit hoher UV-Empfindlichkeit (z.B. spezielle Bt-Toxine und Granuloseviren) oder mit generell schneller Abbaugeschwindigkeit eingesetzt werden, da sie durch die Formulierung in Form der erfindungsgemäßen Flüssigkernkapseln vor einem Abbau geschützt werden. Weiterhin eignen sich die erfindungsgemäßen Flüssigkernkapseln auch für die Formulierung von Bekämpfungsmitteln, die relativ große Wirkmoleküle enthalten, die als solche in der Pflanze nicht transportiert werden. Beispielsweise können die erfindungsgemäßen Flüssigkernkapseln auch für biologische oder biotechnologische Bekämpfungsmittel wie beispielsweise Pilzsporen, Viren, Nematoden, Enzyme oder Klebstoffe verwendet werden. Die erfindungsgemäßen Flüssigkernkapseln eröffnen damit eine umweit- und ressourcenschonende Möglichkeit, Wirkstoffe sehr gezielt und sparsam einzusetzen, wobei das Erntegut mit den Wirkstoffen nicht direkt in Kontakt kommt. Zudem haben die erfindungsgemäßen Flüssigkernkapseln ein günstiges ökotoxikologisches Profil.

Die Erfindung umfasst weiterhin ein Verfahren zur Herstellung der beanspruchten Flüssigkernkapseln.

Dieses Verfahren umfasst zunächst die Bereitstellung einer Mischung für den wässrigen Kern der Flüssigkernkapseln. Die Mischung enthält wenigstens ein Schädlingsbekämpfungsmittel und wenigstens ein Phagostimulans für die Pflanzenschädlinge. Dabei handelt es sich bei dieser Mischung um eine wässrige

Lösung oder um eine Emulsion auf wässriger Basis. Weiterhin wird eine Mischung oder gegebenenfalls mehrere Mischungen für die diffusionshemmende Außenhülle bereitgestellt. Diese Mischung(en) enthält/enthalten vorzugsweise eine Grundsubstanz für die Außenhülle, vorzugsweise in Kombination mit einem Öl, und wenigstens einen Lockstoff für Pflanzenschädlinge. Es ist auch möglich, dass zwei oder mehr Mischungen für die Außenhülle bereitgestellt werden, wobei eine Mischung die Grundsubstanz(en) und eine andere Mischung zumindest den wenigstens einen Lockstoff enthält. Unter Verwendung dieser Mischungen werden die erfindungsgemäßen Flüssigkernkapseln hergestellt.

In einer besonders bevorzugten Ausgestaltung des Herstellungsverfahrens wird der wässrige Kern der Kapseln zunächst in Form einer Primärkapsel stabilisiert, wobei der wässrige Kern mit einer Hydrogel-Hülle umgeben wird. Hierfür wird eine Hydrokolloid-Lösung bereitgestellt, die zur Bildung der Hydrogel-Hülle vorgesehen ist. Die Hydrokolloid-Lösung basiert insbesondere auf einer Biopolymerzusammensetzung. Besonders bevorzugt sind Alginate und/oder Pektin als Biopolymere. Weiterhin sind mit Vorteil Additive vorgesehen, um die Stabilität und die Wasserdiffusionseigenschaften der Hydrogel-Hülle zu beeinflussen. Insbesondere können Schellack und/oder Wachse verwendet werden, wobei hierdurch die Hülle wesentlich dünner und stabiler ausgebildet werden kann als ohne Additive. Besonders geeignet ist mikrokristalline Cellulose als Additiv. Unter Verwendung der Mischung für den wässrigen Kern und der Hydrokolloid-Lösung werden die Primärkapseln hergestellt, die als Kern eine flüssige Phase enthalten, der von einer Hydrogel-Hülle umgeben ist. Die Primärkapseln werden anschließend mit der oder den Mischung(en) für die Außenhülle in einer oder mehreren Schichten beschichtet, wobei die Primärkapseln vorzugsweise ungetrocknet oder nur oberflächlich angetrocknet in einer Wirbelschicht sprühbeschichtet werden.

Die Ausbildung der Hydrogel-Hülle für die Herstellung der Primärkapsel beruht auf einer Vernetzung der Biopolymere, beispielsweise einer Vernetzung von Alginat. Die Vernetzung wird insbesondere dadurch erreicht, dass beispielsweise eine Lösung mit Natrium-Alginat mit zweiwertigen Calciumionen (Ca²⁺) in Kontakt gebracht wird. Hierbei verdrängt das Calcium das Natrium, wodurch es schlagartig zu einer Vernetzung der Alginat-Moleküle kommt. Hierbei bildet sich ein Gel aus, das aus Calcium-Alginat besteht. Das Gel ist ein schwammartiges Gerüst, das zu etwa 99 % aus Wasser oder einer wässrigen Flüssigkeit besteht. Dieses schwammartige Gerüst wird auch als Hydrogel bezeichnet. Bevorzugterweise besteht die innere Hülle der Flüssigkernkapseln aus einem solchen Hydrogel, wobei der Kern selbst flüssig bleibt und frei von dem Hydrogel-Gerüst ist. Die Hüllenbildung bei dem erfindungsgemäßen Verfahren erfolgt hierbei von innen nach außen, wodurch der Kern als solcher flüssig bleibt. Im Vergleich zur Herstellung einer beispielsweise aus der EP 2 415 356 B1 bekannten Matrixkapsel handelt es sich somit um eine umgekehrte Sphärisierung.

Durch die Ausbildung der Hydrogel-Hülle wird die flüssige Phase des Kerns in eine handhabbare Kugelform (Primärkapsel) überführt, die eine nachfolgende Beschichtung für die Ausbildung der funktionellen Außenhülle ermöglicht. Der wässrige Kern enthält dabei neben dem Schädlingsbekämpfungsmittel und einem Phagostimulans, z.B. einer Nährlösung, das die Wirkstoffaufnahme durch die Pflanzenschädlinge anregt, weitere Substanzen, die unter Umständen für den Herstellungsprozess vorteilhaft sind. Zweckmäßigerweise sollten diese Zusätze die Wirkung des Schädlingsbekämpfungsmittels nicht negativ beeinflussen.

Für die Herstellung der Primärkapseln sind insbesondere zwei verschiedene Verfahren besonders vorteilhaft. Bei einem ersten, besonders bevorzugten Verfahren wird die Mischung für den Kern in die Hydrokolloid-Lösung eingetropft, wobei die Mischung für den Kern vorab mit zweiwertigen Ionen, beispielsweise mit Ca²⁺, versetzt wurde. Sobald ein Tropfen in die Hydrokolloid-Lösung eindringt, findet die schlagartige Vernetzung statt, sodass sich das Hydrogel-Gerüst als Primärhülle ausbildet. Die Ausbildung des Hydrogels beschränkt sich hierbei auf die Hülle und der Kern bleibt flüssig. In einem alternativen Verfahren kann die Primärkapsel durch eine Co-Extrusion hergestellt werden, wobei die Mischung für den Kern und die Hydrokolloid-Lösung mithilfe einer speziellen Düse in ein Fällungsbad eingetropft werden. Bei der Spezialdüse für die Co-Extrusion handelt es sich um eine sogenannte Zweistoffdüse, die Flüssigkeitstropfen erzeugt, welche innen die Mischung für den Kern enthalten und außen einen Mantel mit der Hydrokolloid-Lösung. Das Fällungsbad und zweckmäßigerweise auch die Mischung für den Kern enthalten zweiwertige Ionen, beispielsweise Ca²⁺ in Form von CaCl₂, sodass auch bei diesem Verfahren eine Vernetzung in der Hydrokolloid-Lösung stattfindet, wodurch sich eine Hydrogel-Hülle um den flüssigen Kern herum bildet. Nach der Ausbildung der Hydrogel-Hülle werden die Primärkapseln gespült und abgetropft.

Die auf diese Weise hergestellten Primärkapseln haben eine nasse Oberfläche aufgrund des hohen Wassergehalts in der Hydrogel-Hülle. Diese nassen Kapseln werden in dem nachfolgenden Schritt mit der diffusionshemmenden, funktionellen Außenhülle versehen, wobei hierfür vorzugsweise eine Sprühbeschichtung in einer Wirbelschicht vorgenommen wird. Die Sprühbeschichtung erfolgt in der Wirbelschicht beispielsweise in einem sogenannten Wirbelschicht-Coater. Hierbei werden die Primärkapseln in eine Beschichtungskammer eingebracht, wobei Luft eingeblasen wird, sodass die Primärkapseln gewissermaßen in dem Luftstrom schweben. Das Beschichtungsmaterial, also das oder die Gemische für die funktionelle Außenhülle, werden eingesprüht, bis die gewünschte Beschichtung der Primärkapseln erreicht ist. Der ursprüngliche Wassergehalt der Kernmischung bleibt dabei im Wesentlichen erhalten.

Das Beschichtungsmaterial kann prinzipiell in zwei Formen bei der Beschichtung aufgebracht werden. Je nach den verwendeten Materialien kann hierbei entweder ein Hotmelt (Schmelze) oder eine Lösung eingesetzt werden. Als Lösungsmittel eignen sich Wasser oder organische Substanzen. Ein Hotmelt eignet sich insbesondere für das Aufbringen von Fetten oder Wachsen. Eine Beschichtung mit einer Lösung ist geeignet, wenn sich die Beschichtungssubstanzen in einem geeigneten Lösungsmittel lösen lassen. Für den Auftrag der funktionellen Außenhülle wird vorzugsweise etwa 15 bis 30 % Material bezogen auf das Gewicht der Kapseln aufgebracht. Die Schichtdicke der funktionellen Außenhülle liegt hierbei vorzugsweise zwischen 50 und 500 µm, insbesondere zwischen100 und 300 µm. Im Allgemeinen kann die Beschichtung mit einem Hotmelt im Vergleich mit einer Beschichtung mit einer wässrigen Lösung etwas dicker ausfallen. Vorzugsweise basiert die Mischung für die Außenhülle auf einer Grundsubstanz, insbesondere Paraffin, und einer Ölkomponente, vorzugsweise mit einem prozentualen Anteil an der Mischung von 1 bis 25 %. Darüber hinaus sind in der Mischung der oder die Lockstoffe enthalten, beispielsweise mit einem Anteil von 0,0001 bis 1 %. Die funktionelle Außenhülle hat neben der Funktion der Anlockung der Pflanzenschädlinge durch die gesteuerte Freisetzung der entsprechenden Lockstoffe vor allem auch die Funktion eines Verdunstungsschutzes. Vorzugsweise schließt daher die Außenhülle die Primärkapseln nach außen dicht ab. In diesem Zusammenhang ist die Verwendung von Wachsen und/oder Fetten für die Außenhülle besonders vorteilhaft, da hierdurch ein sehr effektiver Verdunstungsschutz erreicht wird.

Bei der Einstellung der konkreten Prozessbedingungen insbesondere für die Sprühbeschichtung werden zweckmäßigerweise die Haftung, die Permeabilität und die mechanischen Eigenschaften der Beschichtungssubstanzen berücksichtigt, indem Faktoren wie beispielsweise die Sprührate, der Sprühdruck, die Prozessluftmenge, die Prozesslufttemperatur und die Sprühtemperatur entsprechend eingestellt werden.

Da die verschiedenen Substanzen für die einzelnen Kapselkomponenten (Kern, Hydrogel-Hülle, Außenhülle) einen Einfluss auf die Funktion und den Herstellungsprozess haben, werden zweckmäßigerweise die Herstellungsbedingungen an die jeweils eingesetzten Substanzen angepasst und aufeinander abgestimmt. Hierdurch können negative chemische Interaktionen vermieden werden.

Bezüglich weiterer Merkmale des Herstellungsverfahrens für die Flüssigkernkapseln wird auf die obige Beschreibung verwiesen, beispielsweise im Hinblick auf die zu verwendenden Lockstoffe und die zu verwendenden Schädlingsbekämpfungsmittel, die in Zuge des Herstellungsprozesses eingebracht werden.

Ein besonderer Vorteil der erfindungsgemäßen Flüssigkernkapseln und des erfindungsgemäßen Herstellungsverfahrens ist, dass die Flüssigkernkapseln für eine Produktion im großen Maßstab und insbesondere für eine industrielle Produktion geeignet sind. Damit kann in kostengünstiger Weise ein Präparat für die Pflanzenschädlingsbekämpfung, beispielsweise zur Bekämpfung der sehr robusten Wiesenwanzen, bereitgestellt werden, mit dem beispielsweise in der Gemüseproduktion wirtschaftliche Schäden durch Schädlinge vermieden oder zumindest deutlich reduziert werden können. Präparate auf der Basis der erfindungsgemäßen Flüssigkernkapseln können dabei auf großen Flächen mit vorhandener Technik ausgebracht werden, da die erfindungsgemäßen Flüssigkernkapseln verhältnismäßig robust sind.

Beschrieben werden weiterhin Flüssigkernkapseln, die durch das beschriebene Herstellungsverfahren und insbesondere durch die bevorzugten Ausgestaltungen des Herstellungsverfahrens herstellbar sind, insbesondere Flüssigkernkapseln, die durch Eintropfen einer Mischung für einen wässrigen Kern der Flüssigkernkapseln in eine Mischung für die Ausbildung einer Hydrogel-Hülle der Flüssigkernkapseln oder durch Co-Extrusion einer Mischung für den wässrigen Kern und einer Mischung für eine Hydrogel-Hülle der Flüssigkernkapseln in ein Fällungsbad zur Ausbildung von Primärkapseln und eine anschließende Sprühbeschichtung der Primärkapseln in einer Wirbelschicht herstellbar sind. Die Beschichtung bzw. die funktionelle Außenhülle ist dabei für die Lockstofffreisetzung, für den Schutz der Kernflüssigkeit und für die Stabilität der Hydrogel-Kapseln verantwortlich.

Weiterhin umfasst die Erfindung eine Verwendung der erfindungsgemäßen Flüssigkernkapseln in einem Präparat für die Pflanzenschädlingsbekämpfung, wobei das Präparat die beanspruchten Flüssigkernkapseln umfasst. Die Flüssigkernkapseln können hierbei in Form von rieselfähigem Granulat bereitgestellt werden, das in einem Pflanzenbestand ausgebracht wird. Die Flüssigkernkapseln bzw. das Granulat können/kann hierbei beispielsweise mit einem herkömmlichen Saatgutstreuer ausgestreut werden. Weiterhin kann das Präparat beispielsweise in Form von in kleinen Beuteln abgepackten Portionen bereitgestellt werden, wobei die Beutel in einen Pflanzenbestand eingebracht werden können. Weiterhin kann das Präparat beispielsweise in Form von Kärtchen oder ähnlichem bereitgestellt werden, auf die die erfindungsgemäßen Flüssigkernkapseln aufgeklebt oder anderweitig fixiert sind. Die Erfindung umfasst dabei auch ein Verfahren zur Pflanzenschädlingsbekämpfung, wobei das Präparat zur Pflanzenschädlingsbekämpfung mit den erfindungsgemäßen Flüssigkernkapseln bereitgestellt und in einen Pflanzenbestand ausgebracht wird.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

In den Zeichnungen zeigen
- Fig. 1 und 2: schematische Darstellungen des Aufbaus von erfindungsgemäßen Flüssigkernkapseln ohne und mit Hydrogel-Hülle;
- Fig. 3 bis 5: Freisetzung von Wirkstoffen ((Z)-3-Hexen-1-ol in Fig. 3, Hexylbutyrat in Fig. 4, (E)-ß-Caryophyllen in Fig. 5) in einem Modellsystem mit unterschiedlichen Ölgehalten in der wirkstoffhaltigen Schicht;
- Fig. 6: zeitlicher Verlauf der Wirkstofffreisetzung bei verschiedenen Flüssigkernkapseltypen;
- Fig. 7: Olfaktometer-Ergebnisse mit unterschiedlichen Wirkstoffen (Lockstoffen) in ihrer anlockenden Wirkung auf Wanzen (0,01 µg/µl); und
- Fig. 8 und 9: Wirkung verschiedener Wirkstoffe auf Wanzen anhand von elektrophysiologischen Untersuchungen (0,1 µg Wirkstoff in Fig. 8, 10 µg Wirkstoff in Fig. 9).

### Beschreibung von Ausführungsbeispielen

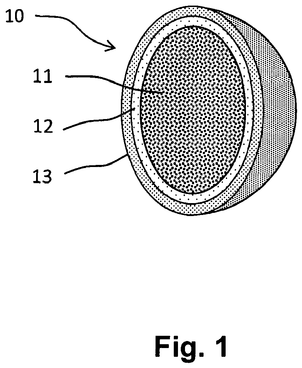

Die in **Fig. 1** dargestellte Flüssigkernkapsel 10 wird von einem Kern 11 gebildet, der eine flüssige Phase umfasst. Der wässrige Kern 11 enthält das Schädlingsbekämpfungsmittel oder gegebenenfalls mehrere Schädlingsbekämpfungsmittel und ein Phagostimulans, insbesondere ein Nährmittel für die zu bekämpfenden Schädlinge. Dieser Kern 11 ist von einer Hydrogel-Hülle 12 umgeben. Die Hydrogel-Hülle 12 wird vorzugsweise von Biopolymeren gebildet, insbesondere von Alginat und/oder Pektin, die durch eine Vernetzung eine Hülle um den wässrigen Kern 11 bilden. Der wässrige Kern 11 zusammen mit der Hydrogel-Hülle 12 bildet die sogenannte Primärkapsel. Diese Primärkapsel ist von einer funktionellen Außenhülle 13 umgeben. Die Außenhülle 13 enthält den oder die Lockstoff(e) und gegebenenfalls ein oder mehrere Einstichstimulanzien für die Pflanzenschädlinge. Hierbei ist die Außenhülle 13 so ausgestaltet, dass sie für die stechend-saugenden Mundwerkzeuge der zu bekämpfenden Pflanzenschädlinge durchstoßbar ist. Durch den in die Außenhülle 13 integrierten Lockstoff oder die Lockstoffe werden die Pflanzenschädlinge angelockt und dazu angeregt, die Außenhülle 13 mit ihren Mundwerkzeugen zu durchstoßen und den wässrigen Inhalt des Kerns 11 zumindest teilweise aufzusaugen. Entsprechend der Wirkung des im Kern 11 enthaltenen Schädlingsbekämpfungsmittels kommt es dadurch zu einer Verletzung, Immobilisierung und/oder Abtötung der Pflanzenschädlinge.

Für die Herstellung der erfindungsgemäßen Flüssigkernkapseln 10 wird zunächst eine Primärkapsel hergestellt, bei der der wässrige Kern 11 von einer Hydrogel-Hülle 12 umgeben ist. Anschließend werden die nassen Primärkapseln in einer Wirbelschicht beschichtet, um die trockene, funktionelle Außenhülle 13 zu bilden.

Durch den Zusatz von Additiven für die Hydrogel-Hülle 12 wird die Wasserdiffusion durch die Hülle der Primärkapsel hindurch herabgesetzt. Hierdurch können die Adhäsionskräfte zwischen den Primärkapseln erheblich reduziert werden, sodass sie für die Sprühbeschichtung getrennt voneinander in einem Luftstrom bewegt (fluidisiert) werden können und der Wassergehalt der Kernmischung im wesentlich unverändert hoch bleibt. Dies ist für eine Sprühbeschichtung in einer Wirbelschicht sehr vorteilhaft.

Die Hydrokolloid-Lösung für die Hydrogel-Hülle 12 wird beispielsweise auf der Basis von Natrium-Alginat hergestellt. Hierfür kann beispielsweise etwa 0,5 bis 2 % Alginat (w/v) in destilliertem Wasser durch längeres Rühren gelöst werden. Als Additiv kann Schellack verwendet werden, wobei beispielsweise eine 25-prozentige wässrige Schellacklösung zu der Alginatlösung gegeben wird (z. B. 20 Teile Schellacklösung + 80 Teile Alginat-Lösung).

Vorversuche haben gezeigt, dass durch den Zusatz von Additiven in die Hydrogel-Hülle die Massenverluste aus dem Kern effektiv verringert werden können. Die folgende Tabelle fasst die absoluten Massenverluste von Alginat-Modellzylindern (d=13 mm, h=13 mm) nach 240 Minuten unter Zusatz verschiedener Additive in ihren geeignetsten Konzentrationen und die relativen Massenverluste bezogen auf den Massenverlust der Standardprobe ohne Zusatz von Additiven zusammen (MCC - mikrokristalline Cellulose, EC - Ethylcellulose).

| Additiv | zugesetzte Konzentration [%] | Massenverlust [%] nach 240 min ohne Additiv ("Standard") | Massenverlust [%] nach 240 min mit Additiv ("Probe") | Massenverlust der Probe nach 240 min bezogen auf den Massenverlust des Standards [%] |
|---|---|---|---|---|
| Schellack | 15,0 | 6,59 | 5,46 | -17,12 |
| Chitosan | 0,75 | 5,22 | 4,52 | -13,45 |
| Stearinsäure | 0,90 | 7,43 | 6,92 | -6,87 |
| Bienenwachs | 0,90 | 5,22 | 4,72 | -9,51 |
| MCC | 0,30 | 6,56 | 6,03 | -8,15 |
| EC | 0,75 | 5,83 | 5,34 | -8,34 |

Es zeigt sich dabei, dass beispielsweise durch den Zusatz von Schellack der Massenverlust um circa 17 % reduziert werden kann.

Vorzugsweise bildet die gegebenenfalls vorgesehene Hydrogel-Hülle etwa 10 bis 15 % des Durchmessers der Primärkapsel aus, wodurch ein ausreichender Raum für die flüssige Phase des Kerns bereitgestellt wird. Bei einem beispielhaften durchschnittlichen Gesamtdurchmesser der Flüssigkernkapseln von circa 4 mm kann die Dicke der Hydrogel-Hülle dann etwa beispielsweise circa 250 µm betragen. Hierdurch wird eine ausreichende Festigkeit der Primärkapseln gewährleistet, die den Kräften bei der Sprühbeschichtung in der Wirbelschicht standhält. Durch die Auswahl geeigneter Hydrogele, die Anpassung der Substanzkonzentrationen und der Prozessparameter wird eine möglichst geringe Wasserdiffusionsrate bei den Primärkapseln erreicht, so dass eine optimale Beschichtung in der Wirbelschicht stattfinden kann. Die Herabsetzung der Wasserdiffusion der Hydrogel-Hülle wird insbesondere durch die zugesetzten Additive erreicht.

Die Herstellung der Primärkapseln kann mittels einer Spezialdüse erfolgen, mit deren Hilfe die Mischung für den wässrigen Kern in die Hydrokolloid-Lösung eingetropft wird. Das Eintropfen der Mischung für den Kern in die Hydrokolloid-Lösung erfolgt unter Rühren. Abhängig von den verwendeten Materialien wird hierbei die Temperatur, der Druck, die Mischungsverhältnisse, pH-Wert, Rührgeschwindigkeit, Viskosität, Pumpenleistung und die Prozesszeiten angepasst und optimiert. Die Mischung für den Kern wird vorab mit zweiwertigen Ionen versetzt, beispielsweise durch Zusatz von Calciumlactat oder Calciumchlorid. Alternativ kann beispielsweise Magnesiumchlorid verwendet werden. Die bei diesem Prozess ausgebildeten Primärkapseln enthalten einen wässrigen Kern und eine umgebende Hydrogel-Hülle aus vernetztem Biopolymer (Alginat). Die Alginat-Hülle lagert sich bei dem Herstellungsprozess gewissermaßen auf den Tropfen der Mischung für den Kern auf. Nach einem oder mehreren Spülgängen werden die Primärkapseln abgetropft und in einem Wirbelschicht-Coater für die Herstellung der funktionellen Außenhülle in der Wirbelschicht sprühbeschichtet. Dabei wird/werden der oder die Lockstoff(e) in die Außenhülle integriert. Die Festigkeit der Außenhülle ist dabei so beschaffen, dass sie beispielsweise von Wanzen durchstoßen werden kann. Andererseits ist die Außenhülle so stabil, dass sie den mechanischen Belastungen bei der Ausbringung der erfindungsgemäßen Flüssigkernkapseln standhält und weiterhin den Inhalt der Flüssigkernkapseln vor schädlichen Umwelteinflüssen, z. B. Austrocknung und UV-Strahlung, schützt. Die erfindungsgemäßen Flüssigkernkapseln können damit über einen längeren Zeitraum ihr Wirkung entfalten, indem die Lockstoffe über einen längeren Zeitraum in die Umgebung abgegeben werden und damit die Pflanzenschädlinge anlocken. Auch das Schädlingsbekämpfungsmittel im Inneren der Flüssigkernkapseln ist über einen längeren Zeitraum geschützt und stabil und kann somit seine Wirkung entfalten.

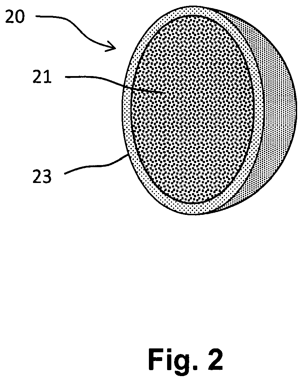

**Fig. 2** illustriert ebenfalls eine erfindungsgemäße Flüssigkernkapsel 20 mit einem flüssigen Kern 21 und einer diffusionshemmenden, funktionellen Außenhülle 23. In dieser Ausgestaltung ist keine Hydrogel-Hülle vorgesehen, da der Herstellungsprozess für diese Flüssigkernkapsel auf den Zwischenschritt der Stabilisierung des flüssigen Kerns in Form einer Primärkapsel verzichtet. Für ein solches Herstellungsverfahren kann im Prinzip beispielsweise die sogenannten inducap®-CORE-Technologie eingesetzt werden, bei der mittels hydraulischer Impulse die flüssigen Ausgangsmischungen für den Kern und die funktionelle Außenhülle über eine konzentrische Zweistoffdüse in einzelne Flüssigkeitsvolumina portioniert werden und in eine Verfestigungsumgebung eingebracht werden, sodass ein flüssiger Tropfen der Kernflüssigkeit von der verfestigten Hüllflüssigkeit umschlossen ist. Als Verfestigungsumgebung ist beispielsweise eine Temperaturraum geeignet, dessen Temperatur unterhalb des Schmelzpunktes des Materials der Außenhülle liegt.

Die funktionelle Außenhülle 13, 23 der Flüssigkernkapseln ist im Wesentlichen trocken und diffusionshemmend, sodass die erfindungsgemäßen Flüssigkernkapseln 10, 20 im Prinzip rieselfähig und damit in der Anwendung leicht zu handhaben sind. Die Außenhülle 13, 23 gewährleistet einen Verdunstungsschutz, sodass die Flüssigkernkapseln 10, 20 in einen Pflanzenbestand ausgebracht werden können und dort für längere Zeit ihre Wirkung entfalten können.

Die erfindungsgemäßen Flüssigkernkapseln können in Kombination mit verschiedenen Schädlingsbekämpfungsmitteln eingesetzt werden, insbesondere mit biologischen und natürlichen Bekämpfungsmitteln gegen pflanzenschädigende Wanzen. Dabei erlauben die erfindungsgemäßen Flüssigkernkapseln eine Anpassung an die jeweils zu bekämpfende Schädlingsart durch Wahl von geeigneten Bekämpfungsmitteln und Wahl von geeigneten Lockstoffen, wobei das Herstellungsverfahren der Flüssigkernkapseln an die jeweiligen Substanzen zweckmäßigerweise angepasst wird.

Das Schädlingsbekämpfungsmittel sollte den Pflanzenschädling möglichst schnell abtöten oder zumindest derart schwächen, dass von dem Pflanzenschädling keine weitere Schadwirkung mehr ausgeht. Für eine Bekämpfung der Wiesenwanze eignen sich aus der Gruppe der biologischen Wirkstoffe besonders Bt-Isolate und Neembaum-Wirkstoffe. Beide Substanzen haben ein breites Wirkspektrum, zeigen eine schnelle Wirkung und sind zudem für den Bio-Anbau zugelassen. Bei einem geeigneten Schädlingsbekämpfungsmittel für einen zu bekämpfenden Pflanzenschädling sollte nach direkter Aufnahme des Wirkstoffs durch den Pflanzenschädling die Schädigungsquote des Pflanzenschädlings (Mortalität und/oder Nahrungsstopp) vorzugsweise einen Wert von über 70 % erreichen, wobei die Wirkung nach einigen Stunden eintreten sollte. Vor allem die Neembaum-Wirkstoffe haben sich in Kombination mit den erfindungsgemäßen Flüssigkernkapseln als besonders effektiv bei der Bekämpfung der Wiesenwanze erwiesen.

Zur Beurteilung der Attraktivität der erfindungsgemäß eingesetzten Lockstoffe im Vergleich mit einer Pflanze (Wirtspflanze für die Schädlinge) kann die Entscheidungsrate der Pflanzenschädlinge in einem Olfaktometer-Wahlversuch herangezogen werden. Vorzugsweise sollte die Entscheidungsrate deutlich über 50 % für den verwendeten Lockstoff liegen. Zur Identifizierung von geeigneten Lockstoffen in Anpassung an einen zu bekämpfenden Pflanzenschädling können in einem ersten Schritt natürliche Düfte konzentriert werden, beispielsweise durch Auszug mit einem geeigneten Lösungsmittel. Die aktiven Bestandteile der konzentrierten Düfte können anschließend genauer identifiziert werden und beispielsweise als konzentrierte synthetische Stoffe in ihrer Wirkung gesteigert werden. Zur Identifizierung von geeigneten Lockstoffen können verschiedene Duftquellen untersucht werden. Beispielsweise können komplette Pflanzen, Pflanzenteile, Auszüge, Säfte oder Lösungen verwendet werden und in Olfaktometer-Untersuchungen untersucht werden, sodass wirksame Substanzen identifiziert werden können. Die wirksamen Substanzen können weiterhin gaschromatographisch analysiert und weiter untersucht werden. Die identifizierten Lockstoffe können vorzugsweise in konzentrierter und im Wesentlichen reiner Form mit oder ohne Zusätze in die Außenhülle integriert werden, um die Lockwirkung der Flüssigkernkapseln weiter zu steigern.

Die Identifizierung und Gewinnung der Lockstoffe erfolgt beispielsweise stufenweise:
- Auswahl geeigneter Lockstoffquellen, etwa bekannte Wirtspflanzen für die Schädlinge oder vorzugsweise Früchte;
- Gewinnung der Pflanzendüfte (Duftgemische) durch Herstellung von Presssäften oder Auszügen;
- Überprüfung der Eignung in Olfaktometer-Wahlversuchen;
- Elektroantennographie (siehe unten) in Kombination mit einer gaschromatographischen Trennung zur Identifizierung der aktiven Bestandteile in den Duftgemischen;
- Herstellung einer Mischung eines synthetischen oder teilsynthetischen Lockstoffs auf Basis der ermittelten aktiven Substanz(en).

Als Lockstoffe eignen sich insbesondere unpolare-flüchtige Substanzen, die mit Wachsen und/oder Fetten gemischt und in einer gemeinsamen Schicht als funktionelle Außenschicht der Flüssigkernkapseln aufgebracht werden können. Wenn polare Substanzen als Lockstoffe eingesetzt werden, werden diese vorzugsweise in Form einer Extraschicht aufgebracht, sodass es nicht zu einer Erhöhung der Wasserverdunstung aus dem wässrigen Kern kommt.

Als Lockstoffe eignen sich insbesondere die Grünen Blattduftstoffe (green leaf volatiles - GLV) und/oder flüchtige organische Verbindungen (volatile organic compounds - VOC). Die GLV sind in der Regel von dem C6-Körper (Z)-3-Hexenal ableitbar. Bei den VOC handelt sich insbesondere um lipophile Substanzen, die sich in folgende Klassen einordnen lassen: Terpenoide, Derivate des Fettsäurestoffwechsels, Phenylpropane (inkl. Benzolderivate) sowie stickstoff- und schwefelhaltige Verbindungen. In besonders bevorzugter Weise werden als Lockstoffe (Z)-3-Hexenyl-Acetat und/oder (Z)-3-Hexen-1-ol und/oder (E)-β-Carophyllene und/oder 1-Hexanol und/oder Nonanal und/oder Hexylbutyrat und/oder (E)-2-Hexenylbutyrat und/oder Mischungen davon verwendet. Als Lockstoffe können beispielsweise auch homogenisierte (pürierte) Kartoffelpflanzen verwendet werden. Besonders bevorzugt ist eine Mischung aus Carophyllen, (Z)-3-Hexen-1-ol und Hexylbutyrat. Die besonders vorteilhafte Wirkung dieser Substanzen in Bezug auf die Anlockung von Wanzen konnte in Versuchen von den Erfindern gezeigt werden.

Die Zusammensetzung der erfindungsgemäßen Flüssigkernkapseln wird vorzugsweise so eingestellt, dass eine Lockstofffreisetzung über einen Zeitraum von 14 Tagen oder länger erfolgt, wobei die Flüssigkernkapseln im Vergleich mit den Pflanzen, die zu schützen sind, eine höhere Lockwirkung auf die Pflanzenschädlinge aufweisen.

Die Festigkeit der Außenhülle wird vorzugsweise so eingestellt, dass sie weich genug ist, um von den Pflanzenschädlingen durchstoßen zu werden. Gleichzeitig wird die Festigkeit der Außenhülle so eingestellt, dass sie eine ausreichende Stabilität für eine maschinelle Ausbringung zeigt. Die Festigkeit der Außenhülle kann beispielsweise durch die Verwendung von Wachsen mit unterschiedlichem Schmelzpunkt oder durch die Verwendung von verschiedenen, langkettigen Fettsäuren modifiziert werden. Spröde oder harte Außenhüllen können beispielsweise durch die Beimischung von Glycerin weicher werden. Zweckmäßigerweise wird die Zusammensetzung der funktionellen Außenhülle weiterhin so eingestellt, dass eine ausreichende Permeabilität für den Lockstoff oder die Lockstoffe gewährleistet ist.

Die folgende Beschreibung von Ausführungsbeispielen illustriert besonders bevorzugte Möglichkeiten für die Herstellung der Flüssigkernkapseln.

### A. Verfahren zur Herstellung von Flüssigkernkapseln

Zur Herstellung der erfindungsgemäßen Flüssigkernkapseln wurden zwei Verfahren eingesetzt, die sich im Wesentlichen durch den verwendeten Düsentyp und die damit verbundenen technischen Funktionalitäten (Regelaufwand, Ausbeute, Prozesssicherheit) unterscheiden. Zu unterscheiden ist die Herstellung von Flüssigkernkapseln mit und die Herstellung von Flüssigkernkapseln ohne Hydrogel-Hülle. Die Hydrogel-Hülle ist dabei eine Art Hilfskonstruktion, die den flüssigen Kapselkern während des Herstellungsprozesses stabilisiert und die Primärkapsel formt. Ihre Funktion entfällt, sobald die Außenhülle in einem zweiten Verfahrensschritt aufgebracht wurde. Die Primärkapsel entsteht als Zwischenprodukt und kann mittels spezieller Ein- oder Zweistoffdüsen (Co-Extrusionsdüsen) hergestellt werden. Die Herstellung von Flüssigkernkapseln ohne Hydrogel-Hülle erfolgt unter Verwendung von speziellen Zweistoffdüsen. Formgebung, Stabilisierung und Coating werden bei der Herstellung von Flüssigkernkapseln ohne Hydrogel-Hülle in einem Prozess vereint. Im Ergebnis ist der Kern dabei direkt von der Außenhülle umgeben.

### A.1 Flüssigkernkapseln mit Hydrogelhülle

Ein übliches Nährstoffgemisch für Insekten wird mit 6 % (w/w) Calciumlactat, bezogen auf den Wassergehalt der Nährlösung, versetzt. Ein geeignetes Nährstoffgemisch umfasst beispielsweise: 68 % dest. Wasser, 5 % Trockenhefe, 6 % Hefeextrakt, 10 % Eigelbpulver, 5 % Zucker, 5 % Honig und 1 % Casein bei einem Gesamtwassergehalt von 73 %.

Anschließend wird das Gemisch mit dem Pflanzenschutzmittel NeemAzal®-T/S im Verhältnis von circa 1:200 versetzt. Diese Zutaten bilden die Kernlösung der herzustellenden Flüssigkernkapsel.

Als weitere Lösung wird eine 0,1 %ige Natriumalginat-Lösung als vernetzungsfähige Hydrokolloid-Lösung bereitgestellt. Die Hydrokolloid-Lösung wird zusätzlich mit einem Additiv versetzt, um die Hülleigenschaften der herzustellenden Primärkapsel in der angestrebten Weise zu verbessern. Als Additiv wird in einem Ansatz eine 20 %ige wässrige Schellacklösung, die im Verhältnis 1:6 mit der Hydrokolloid-Lösung gemischt wird, verwendet. Für einen weiteren Ansatz wird 0,9 % (w/w) Bienenwachs in der Hydrokolloid-Lösung eingesetzt. Bei der Mischung mit Bienenwachs ist es zweckmäßig, eine circa 80 °C heiße Schmelze herzustellen und diese in der Hydrokolloid-Lösung bei etwa 20.000 bis 25.000 U/min für mindestens 3 min zu dispergieren. In einem weiteren Ansatz wird 0,3 % MCC in der Natriumalginat-Lösung dispergiert.

### A.1.1 Herstellung der Primärkapseln mittels Vertropfung

Die Kernlösung wird mittels einer Düse in die Hydrokolloid-Lösung unter Rühren eingetropft. Es bilden sich die Primärkapseln, die nach einigen Minuten aus der Hydrokolloid-Lösung abgesiebt und mit Wasser abgespült werden. Die Düse umfasst einem Kanal, aus der die Kernlösung austropft. Der Kanal ist konzentrisch von einem zweiten Kanal umgeben, der von Luft durchströmt wird. Über die eingestellt Luftmenge (Trennluft) lässt sich die Tropfengröße regulieren und der Abriss von der Austrittsöffnung erheblich beschleunigen. Der zentrale Kanal hat einen Innendurchmesser zwischen 0,5 bis 1,5 mm, der umgebene Kanal zwischen 1,5 und 3 mm. Dieser Grundaufbau ist technisch relativ einfach und nahezu beliebig zu vervielfältigen, um die Produktionsleistung zu erhöhen. So können z.B. in einem Düsenkopf 128 Doppelkanäle zusammengefasst werden. Die Fördermenge der Kernlösung wird über eine Pumpe oder mittels Druckaufbau aus einem Vorratsbehälter gefördert. Die Fördermenge beträgt vorzugsweise zwischen 0,5 bis 2 g pro Minute und Düsenkanal.

Die Primärkapseln lassen sich alternativ auch mittels einer Zweistoffdüse herstellen, in der sich gleichzeitig zwei Flüssigkeitsströme fördern lassen (Co-Extrusion). Mit Co-Extrusionsdüsen lassen sich auch verhältnismäßig kleine (0,5 bis 1mm) und besonders gleichförmige Primärkapseln herstellen. Diese Düsentypen besitzen im Vergleich zur Einstoffdüse eine reduzierte Leistung, benötigen einen höheren technischen Regelaufwand und lassen sich nicht so einfach zu größeren Einheiten zusammenfassen. Zusätzlich zu der zuvor beschriebenen Einstoffdüse besitzt die Co-Extrusionsdüse einen weiteren Kanal. Im inneren Kanal wird die Nährlösung, im umgebenen Kanal die Hydrokolloid-Lösung gefördert. An der Austrittsöffnung legt sich ein Mantel aus der Hydrokolloid-Lösung um den kugelförmigen Kerntropfen und die Vernetzungsreaktion (Ausbildung der Hydrogel-Hülle) setzt umgehend von innen nach außen ein. Der Abriss von der Austrittsöffnung kann, wie bereits bei der Einstoffdüse beschrieben, durch einen zusätzlichen Trennluftkanal beschleunigt werden. Verwendung finden können auch Zweistoffdüsen, die nicht kontinuierlich fördern, sondern mittels eines Impulses die Kernlösung durch die austretende Hydrokolloid-Lösung befördern. Die Tropfenbildung und der Auswurf können hierbei vergleichbar mit der Technik eines Tintenstrahldruckers erfolgen. Das Ergebnis ist in beiden Fällen identisch: der Kernflüssigkeitstropfen wird beim Durchtritt durch eine zweite Flüssigkeit von dieser umhüllt. Abschließend werden die sich bereits im freien Fall ausbildenden Primärkapseln in ein Bad aus Vernetzungslösung, die beispielsweise 1 % Calciumchlorid oder 6 % Calciumlactat enthält, getropft, um die Hydrogel-Hülle vollständig auszubilden und zu stabilisieren. Die Primärkapseln werden dann von der Vernetzungslösung getrennt (z.B. Siebverfahren) und mit Wasser abgespült.

### A.1.2 Herstellung der funktionellen Außenhülle

Die Coating-Mischung für die Außenhülle besteht im Wesentlichen aus drei Komponenten: ein wachsartiger Grundstoff (Grundsubstanz), beispielsweise Weichparaffin, Rapsöl als Einstichstimulans und als Regulator für die Wirkstofffreisetzung und eine Lockstoffkomponente. Der eingesetzte Lockstoff besteht aus einer Komposition der am häufigsten verbreiteten Bestandteile von Grünen Blattduftstoffen (*green leaf volatiles,* GLV) und flüchtigen organischen Verbindungen aus Pflanzen (*volatile organic compounds,* VOC). Eine geeignete Mischung des Lockstoffs kann beispielsweise Hexenol, (Z)-3-Hexenylacetat, (Z)-3-Hexenal, (E,E)-α-Farnesen, β-Bourbonen Isomer (+), (Z)-3- (Z)-3-Hexenylbutanoat, β-Caryophyllen Isomer (-), und/oder (E)-4,8-Dimethyl-1,3,7-nonatrien beinhalten. Diese Stoffe lassen sich in Reinform über den Chemikalienhandel beziehen (z.B. Sigma-Aldrich Co. LLC) und bedarfsgerecht exakt mischen. Weiterhin können Duftstoffmischungen eingesetzt werden, die mittels spezieller Extraktionsverfahren (z.B. Headspace-Sampling oder Solid phase microextraction - SPME) aus Blättern (z.B. Gurke, Luzerne, Rosskastanie, Tabak) gewonnen wurden. Eine besonders bevorzugte Lockstoffmischung wird aus (Z)-3-Hexen-1-ol, Hexylbutyrat und (E)-b-Caryophyllen im Verhältnis 1:1:1 hergestellt. Der Grundstoff (circa 90 %), das Einstichstimulans (circa 9,8%) und der Lockstoff (circa 0,2 %) werden gemischt. Hierbei wird zuerst eine Vormischung von Lockstoff und Einstichstimulans hergestellt und diese anschließend in die Grundstoffschmelze gerührt. Die Temperatur der Schmelze liegt dabei mindestens 10 bis 30 °C über dem Schmelzpunkt des Grundstoffs. Zur Erzielung einer sehr gleichmäßigen und feinen Verteilung der Vormischung wird ein Dispergiergerät verwendet (circa 20.000 U/min).

Im Anschluss an die Primärkapsel-Herstellung und der Bereitstellung der Coating-Mischung erfolgt das Auftragen (Coating-Prozess) der Außenhülle auf die Primärkapseln mit Hilfe einer Sprühbeschichtungsanlage. Bei einem Produktionsbehälter, der etwa 1 Liter fasst, können circa 300 bis 400 g abgetropfte Primärkapseln beschichtet werden. Je nach Produktionsanlage kann die Produktionsmenge erheblich gesteigert werden. Die erforderliche Fluidisierung der Primärkapseln wird bei einer Prozessluftmenge zwischen 50 und 70 m³/h erreicht. Unmittelbar nach erfolgter Fluidisierung wird die Coating-Mischung in Form einer Schmelze in den Produktionsbehälter gesprüht. Mit den folgenden Parameter lassen sich die erforderlichen Funktionalitäten erreichen: Temperatur der Schmelze 30 bis 50 °C über dem Schmelzpunkt der Grundsubstanz, Sprührate zwischen 4 und 7 g/min. Der Coating-Prozess wird beendet, wenn auf die Primärkapseln etwa 15 % bis 35 % (bezogen auf das Kapselgewicht), insbesondere 15 % bis 30 % und vorzugsweise 20 % bis 30 %, der Coating-Mischung aufgetragen wurde. Mit diesem Herstellungsverfahren lassen sich die gewünschten Eigenschaften der Flüssigkernkapseln, beispielsweise im Hinblick auf die Schichtdicke der Außenhülle und Schärfe der Grenzflächenausbildung, sehr genau und reproduzierbar einstellen.

Aufgrund der geringeren Viskosität des Einstichstimulans (Rapsöl) und des darin eingemischten Lockstoffs im Vergleich mit der Grundsubstanz treten diese Substanzen aus der Grundsubstanz der Außenhülle langsam aus, sodass sie ihre Fernwirkung auf die Pflanzenschädlinge ausüben können. Die Geschwindigkeit dieses Freisetzungsprozesses nimmt mit der Temperatur zu. Vorversuche hierzu haben gezeigt, dass beispielsweise aus einem 100 g schweren Wachsquader mit 10 % Rapsöl nach 10 Tagen bei 25 °C etwa 15 % des enthaltenen Öls ausgetreten ist. Dieser Effekt führt zu einer kontinuierlichen Freisetzung von Einstichstimulans und Lockstoff und gewährleistet die erforderliche Fernwirkung und Langzeitwirkung der Flüssigkernkapseln.

### A.2 Flüssigkernkapseln ohne Hydrogelhülle

Für die Herstellung von Flüssigkernkapseln ohne Hydrogel-Hülle werden Co-Extrusionsdüsen (Zweistoffdüsen) verwendet, die einen inneren Kanal für die Kernlösung und einen konzentrischen, umgebenden Kanal für eine Schmelze der Coating-Mischung aufweisen. Beim Durchtritt des Kernflüssigkeitstropfens wird dieser von der Coating-Mischung umhüllt. Die Temperatur der Kernflüssigkeit liegt dabei circa 10 °C unter dem Schmelzpunkt der Coating-Mischung, sodass die Schmelze sehr schnell von innen nach außen erstarrt und den Tropfen stabilisiert. Die Kapseln werden dabei unter Rühren in ein gekühltes Wasserbad (etwa 10 bis 20 °C) eingetropft, um die Aushärtung abzuschließen.

### B. Bekämpfung der Behaarten Wiesenwanze Lygus rugulipennis

Die Wanze *Lygus rugulipennis* ist eine in Europa sehr weit verbreitete und häufig auftretende Art, die als Schädling etwa 400 Wirtspflanzen aus über 50 Pflanzenfamilien befällt. Wirtschaftliche Schäden entstehen z.B. an Erdbeeren, Gurke, Kartoffeln, Kohl, Luzerne, Möhren, Tabak sowie an verschiedenen Zierpflanzen wie etwa Chrysanthemen oder Fuchsien (HOLOPAINEN, J.K. & VARIS, A.-L. 1991: Host Plants ofthe European tarnished plant bug Lygus rugulipennis. J. Appl. Ent. 111 (1991). 484-498*;* DRAGLAND, S. 1991: Lygus rugulipennis, a harmful insect to many cultivatet plants - II. Demage in cabbage fields and control measures. Häret entege. II. Skadar i kålfelt. 67-76*;* BECH, R. 1967: Zur Bedeutung der Lygus-Arten als Pflanzenschädlinge. Biol. Zentrbl. Heft 2. 205-232)*.*

Es wurden Versuche mit *Lygus rugulipennis* und den erfindungsgemäßen Flüssigkernkapseln durchgeführt, wobei im Kern der Kapseln eine wässrige Nährlösung mit 0,5 % NeemAzal® T/S (biologischer Wirkstoff Azadirachtin 0,1 %) vorhanden war. Ein weiterer Versuch wurde mit dem chemischen Wirkstoff Acetamiprid (0,01 %) durchgeführt. Bei Kontakt der Wanzen mit den Flüssigkernkapseln wurden deren Außenhülle mit dem Saugrüssel durchstochen und die Kernlösung zumindest teilweise aufgenommen. Dies konnten u.a. Versuche in Petrischalen (d = 35 mm) belegen, in denen jeweils eine ausgewachsene Wanze (Imago) oder eine ältere Nymphe (L4/L5) zusammen mit den Flüssigkernkapseln eingebracht und deren Verhalten über einen Zeitraum von 5 min beobachtet wurde. Vor Versuchsbeginn wurden die Tiere einer etwa 6-stündigen Hungerphase ausgesetzt. Alle Tiere, die mit Ihrem Saugrüssel Kontakt mit der erfindungsgemäßen Außenhülle der Flüssigkernkapsel hatten, haben diese auch durchstochen und Kernflüssigkeit aufgesaugt. Darauf lässt die lange Verweildauer des Stechrüssels in der Kapsel schließen. Diese betrug bei den Imagines durchschnittlich 160 sec und bei den Nymphen 150 sec. Vorausgegangen war bei den Imagines eine mittlere Beprobungszeit (Betasten der Kapsel mit dem Stechrüssel) von etwa 30 sec. Bei den Nymphen kam es dagegen nach Erstkontakt mit dem Stechrüssel nahezu unmittelbar zum Durchstich. 28 % aller beobachteten Tiere hatten während der Beobachtungszeit die Kapseln nicht beprobt, sondern zeigten längere Ruhephasen oder haben die Kapsel nur überlaufen.

Etwa nach 1 Tag nach Aufnahme der Kernflüssigkeit mit dem Wirkstoff Azadirachtin stellten die Wanzen ihre Aktivität nahezu vollständig ein und starben im Mittel nach 5 Tagen. Nach Aufnahme des chemischen Wirkstoffes Acetamiprid trat die Wirkung nach wenigen Sekunden ein. Beobachtet wurde ein starkes Zittern der Tiere, der Tod trat nach wenigen Minuten ein.

### C. Ausbringung der Flüssigkernkapseln in einen Pflanzenbestand

Mit Olfaktometer-Wahlversuchen wurde ermittelt, dass ein geeigneter mittlerer Kapselabstand in der zu behandelnde Anbaufläche circa 5 cm beträgt, sodass für die Ausbringung in den Pflanzenbestand circa 400 Kapseln/m² veranschlagt wurde. Bei einem durchschnittlichen Kapselgewicht von 15,1 mg, beträgt demnach die erforderliche Aufwandmenge circa 61 kg/ha. Die Möglichkeit zur großflächigen Ausbringung der erfindungsgemäßen Flüssigkernkapseln wurde mittels eines pneumatischen Sägerätes vom Typ PS 250 der Firma APV-Technische Produkte GmbH überprüft. Mit diesem Gerät können die erforderlichen 61 kg in circa 30 min, bei einer durchschnittlichen Fahrgeschwindigkeit von 3 km/h und einer Streubreite von 7 m, gleichmäßig auf 1 ha verteilt werden. Die Auswurfmenge pro Zeiteinheit wird anhand der einzustellenden Saatwellengeschwindigkeit reguliert. Für das zuvor genannte Beispiel betrug der erforderliche Stellwert 75 %. Ein Vergleich von mechanisch unbeanspruchten erfindungsgemäßen Flüssigkernkapseln mit beanspruchten Flüssigkernkapseln, die durch das Sägerät ausgeworfen wurden, ergab ein Beschädigungsgrad von unter 2 %. Als Maß für die Beschädigung diente der Massenverlust durch Verdunstung. Die Außenhülle hat somit eine ausreichende Festigkeit, um der maschinellen Ausbringung standzuhalten.

Neben der gleichmäßigen Verteilung können die Kapseln auch punktweise in den zu schützenden Pflanzenbestand eingebracht werden. Dazu eignen sich kleine Trägerkarten aus starren Papierkarton (circa 30 x 80 mm groß), auf die die Flüssigkernkapseln aufgeklebt sind. Bevorzugt sind die Karten mit einem geeigneten Haken ausgestattet, um eine einfache und schnelle Anbringung an jede Pflanze zu ermöglichen. Diese Ausbringungsform eignet sich vor allem für den geschützten Anbau, z.B. im Gewächshaus oder Folientunnel. Häufig sind dort die Anbaubereiche für große Maschinen nicht zugänglich und Einzelpflanzen stehen nicht gleichmäßig verteilt, sondern auf speziellen Tischen, sodass eine flächige Ausbringung schwierig ist.

### D. Modellsystem zur Freisetzung von Lockstoffen in Abhängigkeit von der Zusammensetzung der Außenhülle

### Duftstoffgemisch (Wirkstoffe)

- 3 Komponenten im Verhältnis 1:1:1
- Blattduftstoffe und Sexualpheromon
- gegeben ist eine unterschiedliche Flüchtigkeit der Einzelkomponenten

### Varianten

Modelsystem Hüllmischung in Petrischalen, Schichtdicke ca. 0,5 mm
- Zusammensetzung Hüllmischung 1: 1,2 g Paraffin, 10% Pflanzenöl, 30µg Duftmischung
- Zusammensetzung Hüllmischung 2: 1,2 g Paraffin, 1% Pflanzenöl, 30µg Duftmischung
- Zusammensetzung Hüllmischung 3: 1,2 g Paraffin, 10% Pflanzenöl, 3mg Duftmischung
- Zusammensetzung Hüllmischung 4: 1,2 g Paraffin, 1% Pflanzenöl, 3mg Duftmischung

### Durchführung

Für die Herstellung des Modellsystems wurde eine Paraffinschmelze bei 80 °C bereitet. 1 % oder 10 % Pflanzenöl wurde in die Schmelze eingerührt. Danach erfolgte die Zugabe der drei Duftstoffe (Gemisch) in zwei unterschiedlichen Mengen (30 µg bzw. 3 mg pro 1,2 g Mischung) mittels Mikroliterspritze. Die Mischung wurde in Petrischalen mit einer Schichtdicke von ca. 0,5 bis 1 mm eingegossen.

Direkt nach der Herstellung der Proben erfolgte die Duftstoffsammlung mittels Spezialapparatur (Headspace Sampling). Die Sammelfilter wurden nach entsprechendem Zeitraum entnommen und bis zur Analyse eingefroren. Die chemische Analyse der Duftstoffe erfolgte mittels Gaschromatographie mit Massenspektrometrie-Kopplung = GC-MS.

### Ergebnisse

Im Modellsystem konnte gezeigt werden, dass die Duftstoffe über einen Zeitraum von 72 h relativ konstant (linear) abgegeben werden. Nach 72 h wurde der Versuch beendet. In dieser Zeit wurde nur ein Bruchteil der enthaltenden Duftstoffe abgegeben. Setzt man voraus, dass die lineare Freisetzung etwa konstant bleibt, wäre der Duftstoff erst nach ca. 100 Tagen vollständig entwichen.

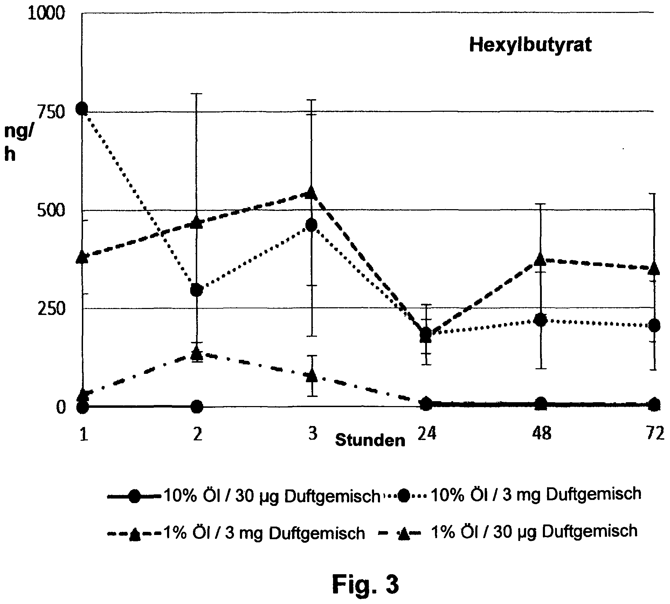

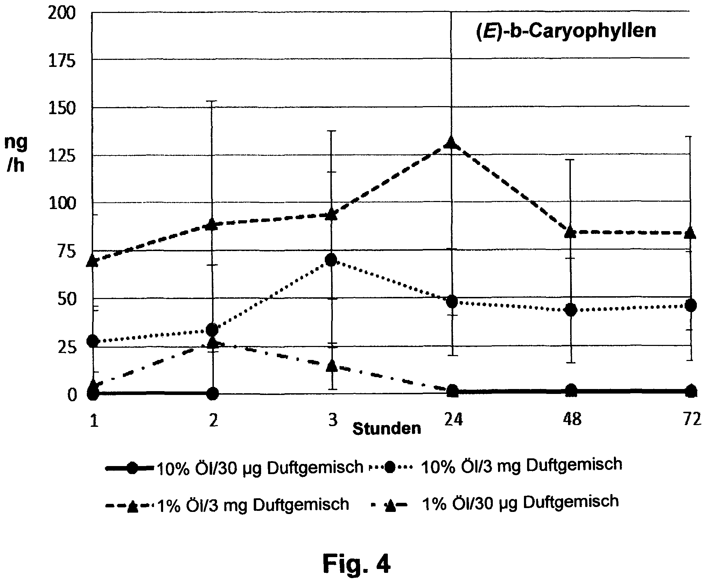

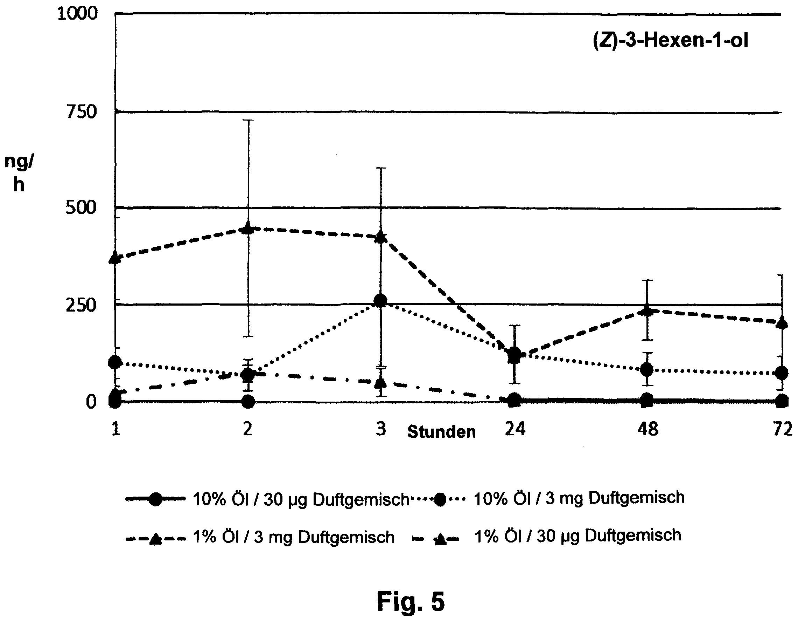

In den **Fig. 3****,** **4** **und** **5** ist die freigesetzte Duftstoffmenge im Zeitverlauf (bis 72 h) für jeden Duftstoff einzeln grafisch dargestellt. Bei den drei Duftstoffen ist eine annähernd lineare Freisetzung pro Stunde zu erkennen. Die Gesamtmenge an ng/h der Duftstoffmischung (alle drei Komponenten) liegt z.B. bei 1 % Ölanteil und 3 mg Gesamtmenge an Duftstoffgemisch bei (250+325+80 = 655) 655 ng/h. D.h. bei konstanter Freisetzung würde die Kapsel bis zu 190 Tage lang duften (3000µg/0.655 µg = 191 Tage).

Weiterhin ist zu erkennen, dass bei den Ansätzen mit 10 % Öl im Vergleich mit den Ansätzen mit 1 % Öl nahezu durchgängig eine geringere Duftstofffreisetzung zu beobachten war. Dies zeigt, dass die Ölmenge die Freisetzung der Duftstoffe beeinflusst. Eine Erhöhung des Ölgehaltes führt zu einer reduzierten Freisetzung. Dieser Effekt zeigte sich bei beiden Duftstoffkonzentrationen. Im Ergebnis lässt sich also durch eine Erhöhung des Ölanteils die Lockstofffreigabe reduzieren bzw. verzögern.

### E. Vergleich der Wirkstofffreisetzung bei Flüssigkernkapseln in zwei Herstellungsvarianten

### Flüssigkernkapseln

- Herstellungsvariante Typ 1: erste Sprühphase (innerer Wandbereich) 10 % Paraffin (bezogen auf Kapselgewicht), zweite Sprühphase (äußerer Wandbereich) 10% Hüllmischung 4 (siehe Abschnitt D)
- Herstellungsvariante Typ 2: erste Sprühphase (innerer Wandbereich) 15% Hüllmischung 4, zweite Sprühphase (äußerer Wandbereich) 15 % Paraffin

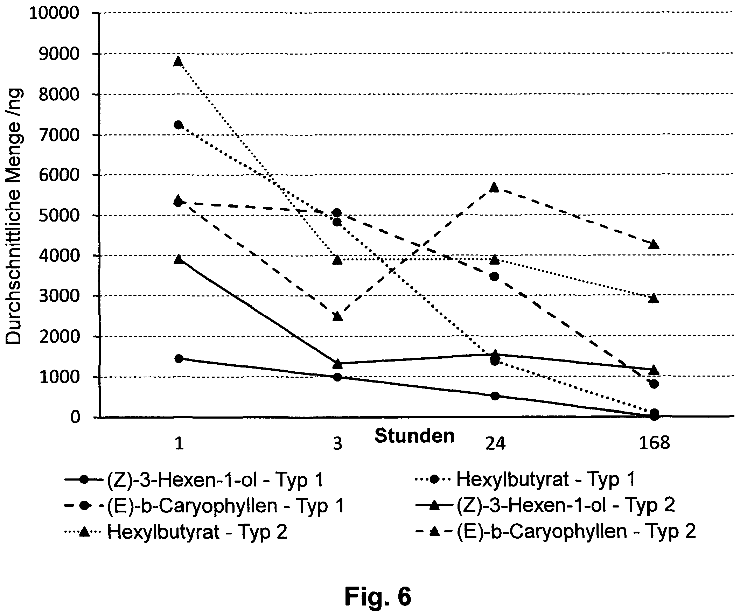

Die Herstellung der Flüssigkernkapseln erfolgte wie im Abschnitt A beschrieben. Die Durchführung des Versuchs erfolgte im Prinzip wie bei dem unter Abschnitt D beschriebenen Modellsystem im Hinblick auf die Duftstoffsammlung und die Analyse durch Gaschromatographie mit Massenspektrometrie-Kopplung. Die nachfolgende Tabelle und die Fig. 6 fassen die Ergebnisse dieses Versuchs zusammen.

| | **Gesamtmenge an Duftstoff pro Zeiteinheit** | |
|---|---|---|
| | **1 Woche** | **1 Woche** |
| | **Typ 1** | **Typ 2** |
| **(Z)-3-Hexen-1-ol** | 15,2 | 235,1 |
| **Hexylbutyrat** | 58,8 | 592,0 |
| **(*E*)-b-Caryophyllen** | 205,2 | 781,0 |
| **Gesamtmenge an Duftstoff /µg** | 279,2 | 1608,2 |
| | | |
| | **Typ 1** | **Typ 2** |
| (***Z*)-3-Hexen-1-ol** | 0,5 | 7,8 |
| **Hexylbutyrat** | 2,0 | 19,7 |
| **(*E*)-b-Caryophyllen** | 6,8 | 26,0 |
| **Gesammelter Duftstoff / %** | 9,3 | 53,6 |

Bei den Flüssigkernkapseln der Herstellungsvariante Typ 1 wurde eine erhöhte Freisetzung beobachtet. Bereits nach 1 Woche waren die Duftstoffe nahezu vollständig entwichen, da die Kapseln zu diesem Zeitpunkt kaum noch Duftstoffe abgaben. Andererseits konnten nur 9,3 % der eingebrachten Duftstoffe gesammelt werden. Die Differenz kann als Verlust während des Herstellungsprozesses erklärt werden, der aufgrund der hohen Flüchtigkeit der Lockstoffe unumgänglich ist.

Mit den Flüssigkernkapseln der Herstellungsvariante Typ 2 konnte eine reduzierte Freisetzung erzielt werden. Nach einer anfänglich etwas höheren Freisetzung in der 1. Stunde, blieb die Rate über dem Messzeitraum von 1 Woche recht konstant. Die absolute Duftstofffreisetzung betrug ca. 50 %. Auch nach 1 Woche wurden noch erhebliche Duftstoffmengen abgegeben. Somit war der der Duftstoffvorrat zu diesem Zeitpunkt noch nicht erschöpft und ein sehr hoher Duftstoffverlust während der Herstellung konnte vermieden werden. Fig. 6 zeigt den zeitlichen Verlauf der Wirkstofffreisetzung bei beiden Kapseltypen, jeweils separat für die einzelnen Duftstoffe. Dargestellt ist jeweils die freigesetzte Menge pro Stunde, die sich aus der gesammelten Menge zu den Sammelzeitpunkten 1 h, 3, h, 24 h und 168 h errechnen ließ. Betrachtet man den Trend der Freisetzungskurve in Fig. 6 ist mit dieser Variante ein Freisetzungszeitraum von mindestens 2 Wochen gegeben.

Der Vergleich der beiden Herstellungsvarianten macht deutlich, dass sich dieser Zeitraum grundsätzlich noch verlängern lässt, bspw. durch einen Auftrag von 20% reinem Paraffin als Abschlussschicht und 10% Hüllmischung, oder auch durch eine Schichtung von 25% Paraffin außen und 5% innen.

Die Ergebnisse zeigen, dass je nach Variante der Kapselherstellung der Duftstoffaustritt verzögert bzw. beschleunigt werden kann. Typ 1, bei der als letzte Schicht die Duftstoffmischung aufgesprüht wird, zeigt eine erhöhte Freisetzung des Duftstoffes. Bei Typ 2 wird dagegen die Duftstoffmischung abschließend von einer reinen Paraffinschicht umgeben. Des Weiteren wurden die Schichtdicken von 10 wt % Auftrag auf 15 wt % Auftrag verstärkt. Die Prozessführung wirkt sich somit direkt auf die Kapselstruktur und die Freisetzung des Duftstoffes aus.

### Zusammenfassung

Es kann festgestellt werden, dass sich die Zeitspanne der Duftstofffreigabe und die freigesetzte Duftstoffkonzentration/pro Zeiteinheit sehr gut modifizieren lassen. Erreichbar ist dies durch unterschiedliche Kombinationen von Duftstoffkonzentration, Pflanzenöl und Paraffin. Auch durch Verfahrensanpassungen beim Aufsprühen der Hüllmischung ist eine gezielte Modifizierung der Duftstofffreisetzung erreichbar. Es ist somit sehr gut möglich das System an unterschiedliche Erfordernisse bei der Schädlingsbekämpfung (Schädlingsart, Pflanzenkultur, Anbausystem) anzupassen. Die zur Lockwirkung erforderlichen Duftstoffkonzentrationen können eingestellt und über einen langen Zeitraum freigesetzt werden, wobei bei Pflanzenschutzmaßnahmen ein Wirkzeitraum von etwa 1 Woche im Allgemeinen als akzeptabel gilt.

### F. Olfaktometer-Versuche zur Untersuchung der Lockstoffwirkung auf Wanzen

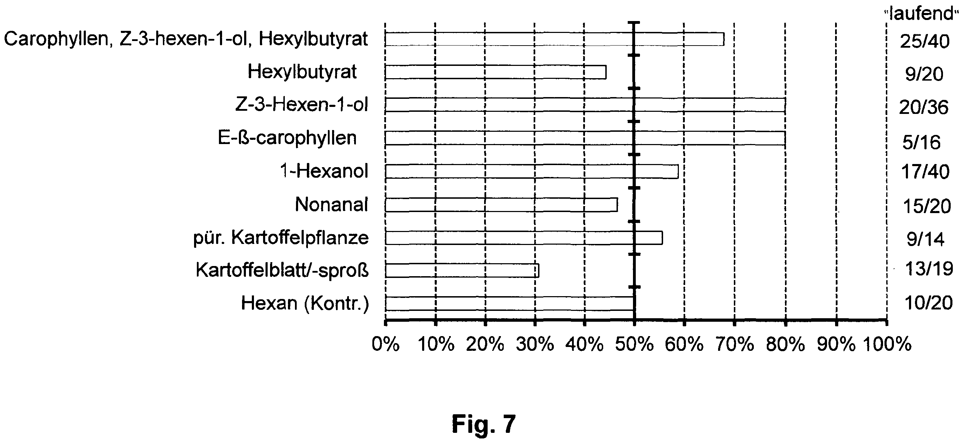

Zur Identifizierung geeigneter Lockstoffe (Duftstoffe) wurden vergleichende Verhaltensuntersuchungen an Wanzen der Art *Lygus rugulipennis* im Olfaktometer durchgeführt. Insgesamt wurde die Lockwirkung von 28 unterschiedlich konzentrierten Substanzen bzw. Substanzgemischen in etwa 380 Einzelversuchen bestimmt. Als rein zufällig wird ein Ergebnis gewertet, wenn sich 50 % der Tiere für bzw. gegen einen Duftstoff entschieden haben. Wenn mehr als etwa 65 % der Tiere in Richtung des Duftstoffes laufen, wird dieser als attraktiv gewertet. Eine Entscheidungsquote von nahe 100 % ist versuchsbedingt nicht zu erwarten, weil Überlagerungen anderer Verhaltensmuster, bei denen Düfte keine Rolle spielen (z.B. Flucht, Stress), auch immer vorhanden sind. Die Sicherheit der Bewertung steigt mit der Versuchsanzahl an und ist ab etwa 10 Wiederholungen gegeben. Eine Auswahl der Ergebnisse ist in **Fig. 7** dargestellt, wobei für die zugrunde liegenden Versuche eine Lockstoffkonzentration von 0,01 µg/µl verwendet wurde.

Das verwendete Lösungsmittel Hexan hatte keinen Einfluss auf die Richtungsentscheidung. Auch zeigte die exakt zufällige Verteilung von 50% bei der Kontrolle, dass keine Seitenpräferenz im Olfaktometer vorlag.

Die reinen Lockstoffe zeigten eine teilweise sehr hohe Lockwirkung. So liefen 80% der Wanzen beim Angebot von (Z)-3-Hexen-1-ol oder (E)-β-Caryophylen in Richtung des Lockstoffs. Der Sexuallockstoff Hexylbutyrat, der in der Literatur als attraktiv beschrieben ist, wurde in den Olfaktometerversuchen nicht präferiert. Mit einer 3-Komponenten-Mischung ist ebenfalls eine Lockwirkung erzielt worden. Es wurde weiterhin ein Einfluss der verwendeten Konzentrationen der einzelnen Lockstoffe festgestellt. So zeigte sich, dass eine Erhöhung der Konzentration die Lockwirkung auch verändern kann. So wird z.B. die Wirkung von (Z)-3-Hexen-1-ol und β-Caryophyllen in erhöhten Konzentrationen reduziert, die von Nonanal gesteigert, wobei Nonanal in einer Konzentration von 0,01 µg/µl eine Lockwirkung von etwa 45 % und in einer Konzentration von 1 µg/µl eine Lockwirkung von etwa 60 % erzielte.

Die mit den erfindungsgemäßen Flüssigkernkapseln freisetzbaren Lockstoffkonzentrationen liegen im Wahrnehmungsbereich der Wanzen, wie die durchgeführten Olfaktometerversuche belegen. Demnach registrieren die Wanzen das verwendete Duftstoffgemisch mindestens in dem untersuchten Konzentrationsbereich von 10 ng bis 10 µg. Eine sehr gute Lockwirkung zeigte sich bei einer Konzentration von 100 ng. Dieser erforderliche Freisetzungsbereich lässt sich ohne Weiteres mit der funktionellen Außenhülle der erfindungsgemäßen Flüssigkernkapseln erzielen.

### G Elektrophysiologische Untersuchungen an Wanzen

Bei der Elektroantennographie handelt es sich um eine Methode zur Messung olfaktorischer Reaktionen eines Insektes durch die Ableitung elektrischer Signale an den Antennen, wobei langsame Rezeptorpotentialänderungen analysiert werden, die vorzugsweise im extrazellulären Raum innerhalb der Insektenantenne abgeleitet werden. Mit dieser Methode können komplexe Duftgemische untersucht werden. Beispielsweise geht aus der DE 11 2010 005 095 T5 die Anwendung der Elektroantennographie zur Identifizierung von Lockstoffen für Wespen hervor.

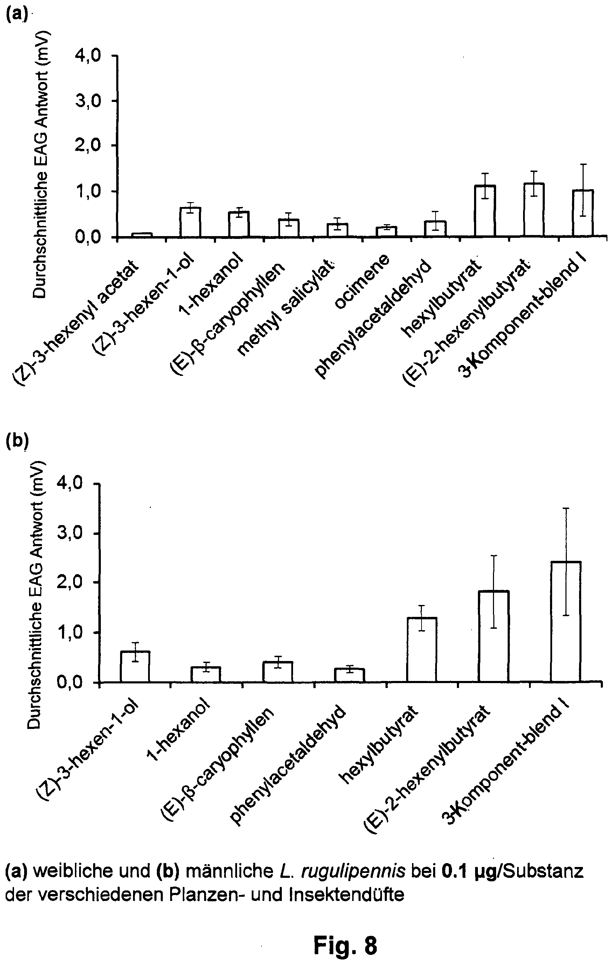

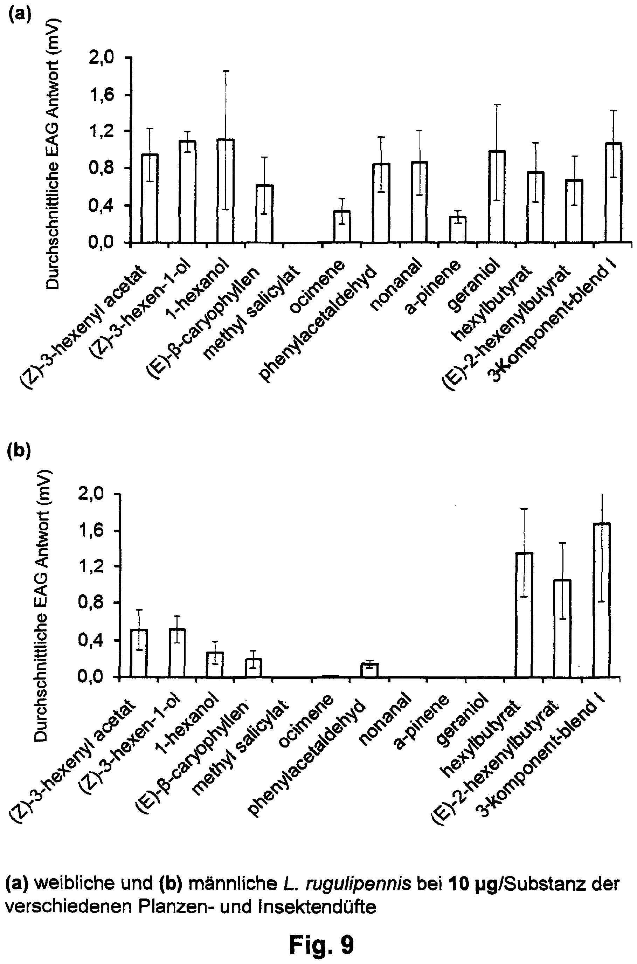

Die **Fig. 8** **und** **9** fassen die Ergebnisse von elektrophysiologischen Untersuchungen an Wanzen zusammen. Hierbei wurden die grünen Blattduftstoffe (GLV) (Z)-3-Hexenyl-Acetat, (Z)-3-Hexen-1-ol, 1-Hexenal, die Terpenoide (E)-ß-Caryophyllen, Methyl-Salicylat, Ocimen, Phenylacetaldehyd, Nonanal, a-Pinen und Geraniol als Pflanzendüfte, Hexylbutyrat und (E)-2-Hexenylbutyrat als Pheromone von Insekten und eine synthetische Wirkstoffmischung aus (Z)-3-Hexen-1-ol, (E)-ß-Caryphyllen und Hexylbutyrat getestet. In Fig. 8 sind die Antworten bei weiblichen (a) und männlichen (b) Wanzen bei einer Wirkstoffkonzentration von 0,1 µg/µl dargestellt. In Fig. 9 sind die Antworten bei weiblichen (a) und männlichen (b) Wanzen bei einer Wirkstoffkonzentration von 10 µg/µl dargestellt.

Die Ergebnisse belegen, dass die Wanzen über Chemorezeptoren an den Antennen verfügen, mit denen sie sehr gut die Gruppe der Pheromone und der GLVs registrieren können. Aus der Gruppe der frassinduzierten Pflanzenduftstoffe wurden einzig Nonanal und Phenylacetaldehyd in der höheren Konzentration registriert, wobei Nonanal im Wesentlichen von den Weibchen registriert wird. Auch zeigte die ermittelte Stärke der Antennenreize in der Duftstoffmischung die grundsätzlich mögliche Steigerung der Lockwirkung durch Kombinationen von Wirkstoffen.

## Patentansprüche

1. Flüssigkernkapseln (10; 20) mit einem durchschnittlichen Durchmesser von 1 bis 10 mm zur Bekämpfung von Pflanzenschädlingen mit stechend-saugenden Mundwerkzeugen, und zwar aus der Gruppe der Wanzen und/oder der Zikaden, wobei die Flüssigkernkapseln einen wässrigen Kern (11, 21) und eine diffusionshemmende Außenhülle (13; 23) aufweisen, wobei der Kern (11; 21) wenigstens ein Schädlingsbekämpfungsmittel enthält und wobei die Außenhülle (13; 23) wenigstens einen Lockstoff für die Schädlinge enthält und wobei der wässrige Kern (11; 21) wenigstens ein Phagostimulans umfasst.

2. Flüssigkernkapseln nach Anspruch 1, **dadurch gekennzeichnet, dass** die Außenhülle eine Grundsubstanz auf der Basis von Fetten und/oder Wachsen sowie ein Öl umfasst.

3. Flüssigkernkapsel nach Anspruch 2, **dadurch gekennzeichnet, dass** die Grundsubstanz Paraffin ist.

4. Flüssigkernkapsel nach Anspruch 2 oder Anspruch 3, **dadurch gekennzeichnet, dass** die Außenhülle einen Anteil des Öls im Bereich von 1 bis 25 % aufweist.

5. Flüssigkernkapseln nach einem der Ansprüche 2 bis 4, **dadurch gekennzeichnet, dass** die Außenhülle einen äußeren, lockstofffreien Bereich aufweist.

6. Flüssigkernkapseln nach einem der vorhergehenden Ansprüche, **dadurch gekennzeichnet, dass** das wenigstens eine Phagostimulans wenigstens ein Kohlenhydrat und/oder wenigstens eine Aminosäure und/oder wenigstens ein Fett umfasst.

7. Flüssigkernkapseln nach Anspruch 6, **dadurch gekennzeichnet, dass** das Phagostimulans ein Nährmittel umfasst.

8. Flüssigkernkapseln nach einem der vorhergehenden Ansprüche, **dadurch gekennzeichnet, dass** der wässrige Kern von einer Hydrogel-Hülle (12) umhüllt ist.

9. Flüssigkernkapseln nach Anspruch 8, **dadurch gekennzeichnet, dass** die Hydrogel-Hülle (12) aus einer Biopolymerzusammensetzung gebildet ist.

10. Flüssigkernkapseln nach Anspruch 9, **dadurch gekennzeichnet, dass** die Biopolymere der Biopolymerzusammensetzung Alginat und/oder Pektin sind.

11. Flüssigkernkapseln nach Anspruch 9 oder Anspruch 10, **dadurch gekennzeichnet, dass** die Biopolymerzusammensetzung weiterhin Schellack und/oder Wachse als Additive umfasst.

12. Flüssigkernkapseln nach einem der vorhergehenden Ansprüche, **dadurch gekennzeichnet, dass** der Lockstoff (Z)-3-hexenyl-Acetat und/oder (Z)-3-Hexen-1-ol und/oder (E)-β-Caryophyllene und/oder 1-Hexanol und/oder Nonanal und/oder Hexylbutyrat und/oder (E)-2-Hexenylbutyrat und/oder Mischungen davon umfasst.

13. Verfahren zur Herstellung von Flüssigkernkapseln (10; 20) gemäß einem der Ansprüche 1 bis 12, umfassend die folgenden Verfahrensschritte:
- Bereitstellen einer Mischung für einen wässrigen Kern (11; 21) der Flüssigkernkapseln (10; 20), wobei die Mischung ein Schädlingsbekämpfungsmittel und wenigstens ein Phagostimulans umfasst,
- Bereitstellen von wenigstens einer Mischung für eine diffusionshemmende Außenhülle (13; 23) der Flüssigkernkapseln (10; 20), wobei die wenigstens eine Mischung wenigstens einen Lockstoff für die Schädlinge umfasst,
- Herstellen von Flüssigkernkapseln (10; 20) unter Verwendung der Mischung für den wässrigen Kern und der wenigstens einen Mischung für die Außenhülle.

14. Verfahren nach Anspruch 13, weiterhin umfassend
- Bereitstellen einer Hydrokolloid-Lösung,
- Herstellen von Primärkapseln mit einer Hydrogel-Hülle (12) und einem wässrigen Kern (11) unter Verwendung der Mischung für den wässrigen Kern und der Hydrokolloid-Lösung,
- Sprühbeschichten der Primärkapseln mit der wenigstens einen Mischung für die Außenhülle (13) in einer Wirbelschicht zur Herstellung der Flüssigkernkapseln (10).

15. Verwendung von Flüssigkernkapseln gemäß einem der Ansprüche 1 bis 12 in einem Präparat für die Bekämpfung von Pflanzenschädlingen mit stechend-saugenden Mundwerkzeugen, und zwar aus der Gruppe der Wanzen und/oder der Zikaden, wobei das Präparat in einen Pflanzenbestand ausgebracht wird.

## Claims

1. Liquid-core capsules (10; 20) with a mean diameter of 1 to 10 mm for control of plant pests having piercing-sucking mouthparts, and namely from the group of true bugs and/or cicadas, wherein the liquid-core capsules have an aqueous core (11, 21) and a diffusion-inhibiting outer shell (13; 23), wherein the core (11; 21) comprises at least one pest control agent and wherein the outer shell (13; 23) comprises at least one attractant for the pests and wherein the aqueous core (11; 21) comprises at least one phagostimulant.

2. Liquid-core capsules according to claim 1, **characterized in that** the outer shell comprises a base substance based on fats and/or waxes, as well as an oil.

3. Liquid-core capsules according to claim 2, **characterized in that** the base substance is paraffin.

4. Liquid-core capsules according to claim 2 or claim 3, **characterized in that** the outer shell has a portion of the oil in the range of 1 to 25 %.

5. Liquid-core capsules according to one of claims 2 to 4, **characterized in that** the outer shell has an outer region that is free of attractant.

6. Liquid-core capsules according to one of the preceding claims, **characterized in that** the at least one phagostimulant comprises at least one carbohydrate and/or at least one amino acid and/or at least one fat.

7. Liquid-core capsules according to claim 6, **characterized in that** the phagostimulant comprises a nutriment.

8. Liquid-core capsules according to one of the preceding claims, **characterized in that** the aqueous core is enclosed by a hydrogel shell (12).

9. Liquid-core capsules according to claim 8, **characterized in that** the hydrogel shell (12) is formed from a biopolymer composition.

10. Liquid-core capsules according to claim 9, **characterized in that** the biopolymers of the biopolymer composition are alginate and/or pectin.

11. Liquid-core capsules according to claim 9 or claim 10, **characterized in that** the biopolymer composition furthermore comprises shellac and/or waxes as additives.

12. Liquid-core capsules according to one of the preceding claims, **characterized in that** the attractant comprises (Z)-3-hexenyl-acetate and/or (Z)-3-hexen-1-ol and/or (E)-β-caryophyllene and/or 1-hexanol and/or nonanal and/or hexyl butyrate and/or (E)-2-hexenyl butyrate and/or mixtures thereof.

13. Method for manufacturing liquid-core capsules (10; 20) according to one of claims 1 to 12, comprising the following method steps:
- providing a mixture for an aqueous core (11; 21) of the liquid-core capsules (10; 20), wherein the mixture comprises a pest control agent and at least one phagostimulant,
- providing at least one mixture for a diffusion-inhibiting outer shell (13; 23) of the liquid-core capsules (10; 20), wherein the at least one mixture comprises at least one attractant for the pests,
- manufacturing liquid-core capsules (10; 20) using the mixture for the aqueous core and the at least one mixture for the outer shell.

14. Method according to claim 13, further comprising
- providing a hydrocolloid solution,
- manufacturing primary capsules having a hydrogel shell (12) and an aqueous core (11) using the mixture for the aqueous core and the hydrocolloid solution,
- spray coating the primary capsules with the at least one mixture for the outer shell (13) in a fluidized bed for manufacturing the liquid-core capsules (10).

15. Use of liquid-core capsules according to one of claims 1 to 12 in a preparation for the control of plant pests having piercing-sucking mouthparts, and namely from the group of true bugs and/or cicadas, wherein the preparation is applied to crops.

## Revendications

1. Capsules à noyau liquide (10, 20) dotées d'un diamètre moyen de 1 à 10 mm pour la lutte contre des parasites des plantes avec des pièces buccales piqueuses suceuses, et en l'occurrence du groupe des punaises et/ou des cigales, où les capsules à noyau liquide présentent un noyau (11, 21) aqueux et une enveloppe extérieure (13 ; 23) empêchant la diffusion, où le noyau (11 ; 21) contient au moins un agent antiparasitaire et où l'enveloppe extérieure (13 ; 23) contient au moins un appât pour les parasites et où le noyau (11 ; 21) aqueux comprend au moins un phagostimulant.

2. Capsules à noyau liquide selon la revendication 1, **caractérisées en ce que** l'enveloppe extérieure comprend une substance fondamentale à base de graisses et/ou de cires, ainsi qu'une huile.

3. Capsule à noyau liquide selon la revendication 2, **caractérisée en ce que** la substance fondamentale est de la paraffine.

4. Capsule à noyau liquide selon la revendication 2 ou la revendication 3, **caractérisée en ce que** l'enveloppe extérieure présente une proportion d'huile dans la plage de 1 à 25 %.

5. Capsules à noyau liquide selon l'une des revendications 2 à 4, **caractérisées en ce que** l'enveloppe extérieure présente une zone extérieure exempte d'appât.

6. Capsules à noyau liquide selon l'une des revendications précédentes, **caractérisées en ce que** l'au moins un phagostimulant comprend au moins un hydrate de carbone, et/ou au moins un acide aminé, et/ou au moins un graisse.

7. Capsules à noyau liquide selon la revendication 6, **caractérisées en ce que** le phagostimulant comprend un aliment nutritionnel.

8. Capsules à noyau liquide selon l'une des revendications précédentes, **caractérisées en ce que** le noyau liquide est entouré d'une enveloppe d'hydrogel (12).

9. Capsules à noyau liquide selon la revendication 8, **caractérisées en ce que** l'enveloppe d'hydrogel (12) est formée à partir d'une composition de biopolymères.

10. Capsules à noyau liquide selon la revendication 9, **caractérisées en ce que** les biopolymères de la composition de biopolymères sont l'alginate et/ou la pectine.

11. Capsules à noyau liquide selon la revendication 9 ou la revendication 10, **caractérisées en ce que** la composition de biopolymères comprend en outre de la gomme-laque et/ou des cires en tant qu'additifs.

12. Capsules à noyau liquide selon l'une des revendications précédentes, **caractérisées en ce que** l'appât comprend de l'acétate de (Z)-3-hexényle, et/ou du (Z)-3-hexèn-1-ol, et/ou du (E)-β-caryophyllène, et/ou du 1-hexanol, et/ou du nonanal, et/ou de l'hexylbutyrate, et/ou de l'(E)-2-hexénylbutyrate, et/ou des mélanges de ceux-ci.

13. Procédé de fabrication de capsules à noyau liquide (10 ; 20) selon l'une des revendications 1 à 12, comprenant les étapes de procédé suivantes :
- la préparation d'un mélange pour un noyau (11 ; 21) aqueux des capsules à noyau liquide (10 ; 20), où le mélange comprend un agent antiparasitaire et au moins un phagostimulant,
- la préparation d'au moins un mélange pour une enveloppe extérieure (13 ; 23) des capsules à noyau liquide (10 ; 20) empêchant la diffusion, où l'au moins un mélange comprend au moins un appât pour les parasites,
- la fabrication de capsules à noyau liquide (10 ; 20) moyennant l'emploi du mélange pour le noyau aqueux et l'au moins un mélange pour l'enveloppe extérieure.

14. Procédé selon la revendication 13, comprenant en outre :
- la préparation d'une solution d'hydrocolloïde,
- la fabrication de capsules primaires avec une enveloppe d'hydrogel (12) et un noyau (11) aqueux moyennant l'emploi du mélange pour le noyau aqueux et de la solution d'hydrocolloïde,
- le revêtement par projection des capsules primaires avec l'au moins un mélange pour l'enveloppe extérieure (13) dans un lit fluidisé pour la fabrication des capsules à noyau liquide (10).

15. Utilisation de capsules à noyau liquide selon l'une des revendications 1 à 12 dans une préparation pour la lutte contre des parasites des plantes avec des pièces buccales piqueuses suceuses et en l'occurrence du groupe des punaises et/ou des cigales, où la préparation est libérée dans une population de plantes.
